# EUROPÄISCHE PATENTSCHRIFT

(11) **EP 3 037 606 B1**
(45) Veröffentlichungstag und Bekanntmachung des Hinweises auf die Patenterteilung: **08.05.2019**
(21) Anmeldenummer: 15195256.1
(22) Anmeldetag: 26.03.2010
(51) Int. Cl.: E04G 21/14, B28B 23/00, B66C 1/66, F16B 45/00

(54) **LASTAUFNAHMEMITTEL**
LOAD BEARING DEVICE
MOYEN DE SUSPENSION DE CHARGE

(30) Priorität: 26.03.2009 DE 202009004065 U
(43) Veröffentlichungstag der Anmeldung: 29.06.2016
(62) Teilanmeldung aus: 10712712.8
(73) Patentinhaber: Pfeifer Holding GmbH & Co. KG, 87700 Memmingen (DE)
(72) Erfinder: Kintscher, Matthias, 87700 Memmingen (DE); Neef, Christoph, 87758 Kronburg (DE)
(74) Vertreter: Pfister & Pfister Patent- und Rechtsanwälte

(56) Entgegenhaltungen:
- DE-A1- 1 684 254
- DE-A1- 1 684 473
- DE-A1- 1 759 484

## Beschreibung

Die Erfindung betrifft ein Lastaufnahmemittel zum Anschlagen schwerer Bauteile, insbesondere Betonfertigteile, bestehend aus mindestens zwei Seilstücken einer Seilschlaufe und einer Seilumlenkung.

Der Begriff "Lastaufnahmemittel" wird in der Fachwelt heutzutage sehr umfassend verstanden. Er umfasst gegebenenfalls auch Elemente, die in dem Betonfertigteil eingebaut sind, wie zum Beispiel Gewindehülsen, die an ihrem unteren Ende eine ankerähnliche Ausgestaltung aufweisen. Über diese Elemente wird das Gewicht des Bauteiles auf das Anschlagmittel übertragen.

Des Weiteren umfasst der Begriff "Lastaufnahmemittel" auch Elemente oder Teile beziehungsweise spezielle Ausgestaltungen am Betonfertigteil. Bekannte Lastaufnahmemittel sind dabei zum Beispiel fest an dem Bauteil angeordnet oder aber lösbar mit diesem verbunden.

Oftmals ist an dem Lastaufnahmemittel, das zumindest ein Seilstück aufweist, eine Seilöse vorgesehen. Das Seilstück ist oftmals Teil einer Seilschlaufe, deren beide Enden parallel liegend in einer zylindrischen Stahlrohrhülse verpresst sind. Üblicherweise wird die Anordnung so gewählt, dass die Seilschlaufe möglichst rechtwinklig abstehend (nachfolgend auch als Längsachse beschrieben) von dem Bauteil angeordnet ist. Im Einsatz ergibt sich ein Winkel zwischen der vorgenannten Längsachse und dem Kraftangriffswinkel, welcher zu einer Beanspruchung der Seile führt. Insbesondere ist es beobachtet worden, dass die Seilstücke bei sehr großen Kraftangriffswinkeln abgeknickt werden können, was zu einer Beeinträchtigung der Belastbarkeit der Seilstücke führt.

Das Dokument DE 175 94 84 A1 offenbart eine Anordnung zum Aufnehmen von Fertigbetonbauteilen mittels Hebezeugen, wobei ein in den Fertigbetonteil eingelassener Durchsteckkanal mit zwei offenen Kanalenden und ein in diesen Durchsteckkanal einsteckbares Seil als temporär wirkendes Lastaufnahmemittel vorgesehen sind, welches mit einem Hebezeug koppelbar ist. Dieses ist nach dem Hebevorgang entfernbar und wiederverwendbar.

Das Dokument DE 168 42 54 A1 offenbart eine Haltevorrichtung für platten- oder blockförmige Masseformteile, bei der in Gebrauchslage ein in der Masse verankertes, ösenförmiges Halteelement aus einer durch ein Einlageelement bestimmten Ausnehmung aufragt. Die vom Einlageelement bestimmte Ausnehmung ist zur vollständigen Aufnahme des Halteelementes für den Betoniervorgang gestaltet und das Halteelement ist in abgebogener Ausgangslage eingesetzt und zur Herstellung der Gebrauchslage aufrichtbar.

Es ist Aufgabe der vorliegenden Erfindung, die Lastaufnahmemittel, wie sie eingangs beschrieben sind, alternativ oder besser auszuführen. Dies wird durch ein Lastaufnahmemittel nach Anspruch 1 erreicht.

Zur Lösung dieser Aufgabe geht die Erfindung aus von einem Lastaufnahmemittel wie eingangs beschrieben und schlägt eine Seilumlenkung vor, die dazu dient, das aus dem Bauteil, insbesondere das aus dem Beton herausstehende Seilstück einer Rundung folgend umzulenken. Die Seilumlenkung ist zum Beispiel als Umlenktrichter ausgebildet und mit einem Radius ausgestattet, der zumindest dem Seildurchmesser entspricht, und so eine Mindestkrümmung darstellt, welche eine zu große Beanspruchung der Seile vermeidet. Der Vorzug der Erfindung liegt darin, dass ein scharfes Abwinkeln oder Abknicken des Seilstückes gezielt vermieden wird, was zu den bekannten Beschädigungen des Seilstückes führen kann. Dementsprechend werden die Bereiche, in welchen das Seilstück am Bauteil beziehungsweise Betonfertigteil bei einem entsprechenden Schrägzug anliegen kann, gerundet ausgeführt. Der Umlenkungswinkel mag dabei zwischen 20° bis 90° betragen.

Der Rundungsbereich kann sich auf mehrere Teilbereiche verteilen, dies hängt von den konkreten Ausgestaltungen im Anwendungsfall ab. So ergibt es sich bei einer bevorzugten Ausgestaltung, dass die Rundung gebildet ist von mindestens zwei Teilrundungen mit gleichen oder unterschiedlichen Radien.

Eine solche Ausgestaltung hat insbesondere einen Vorteil bei verhältnismäßig dünnwandig ausgebildeten Seilumlenkungen. Durch entsprechende formgebende Bearbeitung, zum Beispiel ein Senken oder Pressen, ist es möglich, eine Ausgestaltung der Seilumlenkung zu realisieren, welche endseitig zum Beispiel eine trichterförmige Aufweitung aufweist, wodurch sich zwei beabstandete Teilrundungen ergeben. Die erste Teilrundung ergibt sich am inneren, engen Ende des Trichters, die zweite Teilrundung am oberen, inneren Rand des Trichters. Hierdurch gelingt es, in dem verhältnismäßig dünnwandigen Material, welches ja zu verhältnismäßig geringen Materialradien führt, doch insgesamt eine Rundung mit einem ausreichenden Radius zur Verfügung zu stellen, der übermäßige Belastung des Seilstückes zuverlässig vermeidet. Geschickter Weise sind dabei die Teilrundungen in Richtung der Längsachse der Seilumlenkung (Rohrpressklemme) hintereinander angeordnet und in Richtung der Längsachse gesehen, auch radial von einander versetzt.

Die Erfindung ist dabei nicht auf die Anordnung von nur zwei Teilrundungen im Bereich der Rundung der Seilumlenkung beschränkt, es können auch mehr als zwei Teilrundungen vorgesehen sein. Auch die Ausgestaltungen der einzelnen Teilrundungen sind durch die Erfindung nicht beschränkt, es ist möglich, dass die Radien, welche die Teilrundungen beschreiben, einander gleich oder unterschiedlich sind. Es ist klar, dass mit dem Begriff Teilrundung jetzt nicht nur eine exakte tangential auslaufende Kreissegmentlinie zu verstehen ist, sondern jegliche Wölbung oder Krümmung hiervon in gleicher Weise umfasste ist. Die Rundung kann daher zum Beispiel Teil einer Parabel, Hyperbel, Ellipse oder ähnlichem sein. Sie ist bevorzugt stetig ausgebildet.

Die vorgeschlagene Ausgestaltung, in welcher die Rundung aufgeteilt ist in zumindest zwei Teilrundungen hat außer dem fertigungstechnischen Vorteil auch den Vorteil, dass die Seilumlenkung selber sehr materialsparend aufgebaut wird, da diese sehr dünnwandig ausgestaltbar ist.

Wie später noch ausführlich ausgeführt ist, ist eine Ausgestaltung der Seilumlenkung einstückig an einer Rohrpressklemme angeordnet. In einer Variante des Lastaufnahmemittels ist gefunden worden, dass die Dicke der Rohrwand der Rohrpressklemme mit der einstückig daran angeformten Seilumlenkung weniger als 15 % der Länge der Rohrpressklemme mit einer daran angeformten Seilumlenkung beträgt. Die Dicke der Rohrwand der Rohrpressklemme bezieht sich dabei auf den mit dem Seilstück verpressten Zustand. Dabei hat die Erfindung auch weiter hervorgebracht, dass sogar weniger als 10 %, insbesondere sogar weniger als 8 % der Länge der Rohrpressklemme als Dicke der Rohrwand der Rohrpressklemme ausreichen, um den erfindungsgemäßen Effekt, nämlich eine verhältnismäßig grosse Rundung des Seilumlenkung, realisierend aus mehreren kleinen Teilrundungen, zu erreichen.

In einer Ausgestaltung ist die Anordnung der Teilrundungen derart beabstandet, dass das Seilstück nur im Bereich der Teilrundungen an der Seilumlenkung anliegt. Dabei kann es sich ergeben, dass zwischen den Teilrundungen Bereiche der Seilumlenkung mit großen oder negativen Radien oder einem Freistich oder einen Absatz vorgesehen ist. Soweit die Rundung beziehungsweise Teilrundung durch einen Radius definiert ist, ist ein solcher Radius als positiver Radius zu verstehen. Eine solche Ausgestaltung ist auch als konvex zu beschreiben. Ein Bereich mit negativen Radius wäre insofern als konkav zu beschreiben, wobei das gleiche auch mit einem Freistich, also zum Beispiel einen Abtriebvorgang oder einen Absatz oder ähnlichem zu erreichen ist. Was hieraus folgt, ist, das das umgelenkte Seilstück nur an Teilbereichen an der Seilumlenkung anliegt und den übrigen Bereich an der Seilumlenkung überspannt.

Ein wesentlicher Vorzug liegt darin, dass die einzelnen Radien der Teilrundungen kleiner sind als der Radius der Rundung. Durch die geschickte Ausgestaltung der Seilumlenkung wie beschrieben, ist es möglich, mit einer verhältnismäßig dünnwandigen Seilumlenkung, welche eher zu sehr kleinen Radien der Teilrundungen führt, einen Radius der Rundung insgesamt zur Verfügung zu stellen, der groß genug ist, um eine übermäßige Belastung des abgewickelten Seiles zu vermeiden. Somit überbrückt diese Variante einen technischen Nachteil der dünnwandigen Seilumlenkung, wenn diese zum Beispiel als Rohrpressklemmen oder ähnlichem ausgebildet sind. Durch den Vorschlag, der die Rundung auf mehrere Teilrundungen aufteilt, ist es möglich, die Erfindung an einer dünnwandigen Seilumlenkung zu realisieren, die per se nur zwei kleine Rundungsradien zur Verfügung stellt. Dies ist ein erheblicher Vorteil.

Wie bereits ausgeführt ist das Seilstück Teil einer Seilöse. Dabei gibt es mehrere Varianten, wie diese Seilöse mit dem Bauteil verbindbar ist. In einer ersten Variante ist die Seilöse bei Bedarf mit dem Bauteil verbindbar, in einer anderen Variante wird die Seilöse als solches in das Bauteil, insbesondere das Betonfertigteil eingebaut und ist nicht zerstörungsfrei entfernbar.

Hierzu ist vorgesehen, dass die Seilöse von einer Seilschlaufe gebildet ist, deren beide Enden an dem gleichen oder gegenüberliegenden Ende einer Rohrpressklemme im Wesentlichen parallel zueinander liegend in dieser verpresst sind. In der vorgeschilderten ersten Variante werden die beiden Enden der Seilschlaufe in dem gleichen Ende der Rohrpressklemme eingelegt und durch den Pressvorgang der Rohrpressklemme in dieser fest zusammengedrückt. Hernach wird auf die Rohrpressklemme ein Gewinde aufgeschnitten, das mit dem Gewinde einer Gewindehülse, welche im Bauteil angeordnet ist, verschraubbar ist. Hierdurch entsteht eine mehrfach verwendbare Seilöse als Teil des Lastaufnahmemittels.

Alternativ hierzu ist vorgesehen, dass die Seilenden der Seilschlaufe an jeweils gegenüberliegenden Enden in die Rohrpressklemme eingeführt werden und eine ringartige Gestaltung der Seilöse ergeben. Eine so ausgebildete Seilöse wird als Ganzes in das Bauteil eingebaut. Eine solche Seilöse ist auch als BS-Anker bekannt. Der gewählte Begriff "Seilöse" überdeckt beide Varianten.

Natürlich sind auch Lösungen umfasst, bei welchen eine Seilschlaufe beziehungsweise Seilöse ohne Verwendung einer Rohrpressklemme geschaffen wird.

Aufgrund der unterschiedlichen Ausgestaltungen der Seilstücke beziehungsweise der Seilösen ergeben sich auch verschiedene Anwendungsfälle.

So ist zum Beispiel in einer ersten Variante vorgesehen, dass das Seilstück Teil einer Seilöse ist, die mit einer in dem Bauteil angegebenen Gewindehülse verschraubbar ist und die Seilumlenkung dazu dient, das Seilstück der Seilöse, das sich in einem Umlenkungsbereich an dem Gewinde anschließt, einer Rundung folgend umzulenken.

Nach dieser Variante ist das Seilstück lösbar mit dem Bauteil verbindbar, wobei die Gewindehülse entweder bündig mit der Begrenzungsfläche des Bauteiles beziehungsweise des Betonfertigteiles abschließt, oder aber die Gewindehülse gegenüber der Begrenzungsfläche des Bauteiles, in einer Ausnehmung angeordnet, zurückgesetzt ist.

In der anderen Variante wird die Seilöse als Ganzes in das Betonfertigteil eingebaut und ist unlösbar mit diesem verbunden beziehungsweise nur durch Zerstörung der Seilöse wieder entfernbar. Dabei entsteht eine Anordnung, nach welcher das Seilstück an einer Austrittsstelle aus dem Bauteil austritt und an einer, von der Austrittsstelle beabstandeten Eintrittsstelle in dieses eintritt, wobei sowohl an der Aus- wie auch an der Eintrittsstelle je eine Seilumlenkung vorgesehen ist.

Neben den vorgenannten verschiedenen Varianten der Ausgestaltung der Seilöse ist auch die Ausgestaltung der Seilumlenkung selbst sehr variabel gestaltbar. Zunächst wird vorgeschlagen, dass die Seilumlenkung einstückig an der Gewindehülse angeordnet ist. Eine solche Variante ist günstig, da die Seilumlenkung derart an der Gewindehülse realisiert ist, dass die Seilumlenkung nicht verloren werden kann. Der gleiche Vorteil ergibt sich auch bei der Variante, bei welcher die Seilumlenkung einstückig an der Rohrpressklemme angeordnet ist.

Die beiden vorgenannten Verbesserungen betreffen insbesondere die Ausgestaltung, bei welcher die Seilöse in eine Gewindehülse einschraubbar ist, also von dieser lösbar ist. Es wird aber auch eine Lösung vorgeschlagen, bei welcher die Seilumlenkung am Bauteil, insbesondere am Betonfertigteil vorgesehen ist. Eine solche Anordnung ist sowohl bei der Variante der Seilöse, bei welcher bei Bedarf die Seilöse mit dem Bauteil verbindbar ist, wie auch bei der Variante, bei welcher die Seilöse in das Bauteil eingebaut ist, einsetzbar. Geschickterweise ist dabei in dem Bereich des Bauteiles, in welchem das Seilstück austritt, in der Begrenzungsfläche des Bauteiles eine Ausnehmung vorgesehen, deren Ausnehmungsfläche zumindest teilweise als Seilumlenkung dient. Dabei ist natürlich klar, dass das Seilstück bereits im Bereich der Ausnehmung aus dem Bauteil hervortritt.

Für die Realisierung einer Ausnehmungsflache, die zumindest teilweise als Seilumlenkung dient, ist in einer weiteren Variante ein Formteil vorgesehen, das mit der Gewindehülse verbindbar, insbesondere verschraubbar, oder mit der Schalung verbindbar oder alleine an der Begrenzungsfläche, insbesondere der Betonoberfläche anordenbar ist. Das Formteil hat dann die Aufgabe, die Ausnehmungsflachen zu formen.

In einer weiteren Ausgestaltung ist es vorgesehen, dass sich an die Rundung der als Seilumlenkung dienenden Ausnehmungsfläche ein gegenüber der Begrenzungsfläche zurückgesetzter Absatz anschließt, der zur Aufnahme des Verschlussteiles dient. Die Anordnung eines Verschlussteiles an der Ausnehmung erlaubt es, diesen Bereich nach der Benutzung korrosionstechnisch einwandfrei zu verschließen. Das Formteil, welches bereits für die Bildung der Ausnehmungsflächen verwendet wird, wird dabei in entsprechender Weise weiterentwickelt, derart, dass es den Absatz, wie beschrieben, besitzt. Es wurde bereits darauf hingewiesen, dass es in einer Variante von Vorteil ist, dass die Seilumlenkung einstückig, entweder mit der Rohrpressklemme oder mit der Gewindehülse ausgebildet ist. In diesem Fall ist zum Beispiel die Gewindehülse als entsprechendes Schmiede- oder Pressteil gebildet, um die Seilumlenkung zur Verfügung zu stellen. Ähnliches ist auch bei der Rohrpressklemme vorgesehen, die zum Beispiel einen entsprechenden trichterförmigen Schulterkranz aufweist, der ebenfalls in dem Herstellprozess der Rohrpressklemmverbindung mit den Seilstücken realisierbar ist.

Umfasst sind aber auch Lösungen, bei welchen die Seilumlenkung als separates Element ausgebildet ist und gegebenenfalls mit der Gewindehülse oder der Rohrpressklemme verbindbar, insbesondere aufschraubbar oder verschraubbar ist.

Hierzu ist in einer Variante vorgesehen, dass die Seilumlenkung als separates Element auf dem Außengewinde der Rohrpressklemme aufschraubbar oder auf der Rohrpressklemme aufpressbar ist.

Alternativ hierzu ist vorgesehen, dass die Seilumlenkung als separates Element ausgebildet ist und einen Flanschbereich aufweist, welcher auf der Gewindehülse aufliegt und der Flanschbereich zwischen Gewindehülse und Seilöse beziehungsweise Rohrpressklemme angeordnet ist.

Soweit die Seilumlenkung als separates Element ausgebildet ist, und einerseits mit der Gewindehülse beziehungsweise andererseits mit der Rohrpressklemme zum Beispiel durch eine Schraubverbindung verbindbar ist, ist die Seilumlenkung auch mehrfach verwendbar.

Dabei ist es insbesondere von Vorteil, dass eine Anordnung so gewählt ist, dass die Seilumlenkung insbesondere für das Anheben des Bauteiles mit der Gewindehülse oder der Rohrpressklemme fest verbindbar ist. Auch wenn es sich bei der Seilumlenkung um ein separates Element handelt, das bestimmungsgemäß mehrfach verwendet werden kann, wird durch diese Ausgestaltung sichergestellt, dass die Seilumlenkung auch tatsächlich einsetzbar ist, da sich über deren Anlageflächen eine erhebliche Kraft abzustützen vermag und daher eine Festlegung der Seilumlenkung sehr vorteilhaft ist. Günstigerweise wird dabei der an der Gewindehülse beziehungsweise an der Rohrpressklemme sowieso bereits vorgesehene Gewindeabschnitt verwendet, welcher in geeigneter Weise mit einem entsprechenden Innen- oder Außengewinde an der Seilumlenkung zusammenwirkt. So wird die Seilumlenkung zum Beispiel erst durch Abschrauben wieder von der Gewindehülse beziehungsweise der Rohrpressklemme entfernt und kann auch nicht versehentlich verlorengehen.

In einer weiteren Variante ist vorgesehen, dass die Rohrpressklemme in dem die Rundung aufweisenden Bereich eine konische oder trichterförmige Außenkontur aufweist. Die auf das Seilstück aufgepresste Rohrpressklemme wird gewonnen durch einen Rohrabschnitt mit zunächst größerem Durchmessern. Nachdem das Seilende in das Rohrinnere eingelegt ist, wird die Rohrpressklemme radial verpresst, wobei die Pressbacken nicht über die gesamt Höhe der Rohrpressklemme an dieser angreifen. Es verbleibt somit endseitig, bevorzugt auf der Seite wo die Seilenden aus der Rohrpressklemme herausstehen, eine Aufweitung in radialer Richtung, welche zum einen an seiner inneren Seite die Rundung, insbesondere die die Rundung bildenden Teilrundungen, zur Verfügung stellt und an der Außenseite eine konische oder trichterförmige Außenkontur besitzt. Das Rohrstück, das als Rohrpressklammer verwendet wird, besitzt dabei an seiner, aus dem Bauteil herausstehenden Ende an seiner Innenfläche eine Konus oder Rundung, der an der fertigen Rohrpressklammer die zweite Teilrundung bildet. Dabei ist zu beachten, dass das an der Rohrpressklemme an der dem Bauteil (Betonfertigteil) abgewandtem Ende sich an der konischen oder trichterförmigen Außenkontur ein zylindrischer Bereich anschließt. Dieser zylindrische Bereich ist im Querschnitt gesehen rund oder auch mehreckig und erleichtert sehr das Einspannen der verpressten Rohrpressklemme in einem Werkstückhalter, um dann auf der Mantelfläche der Rohrpressklemme das Gewinde einzuschneiden. In einer Ausgestaltung ergibt sich daher ein Lastaufnahmemittel wie beschrieben, bei welcher die Seilumlenkung einstückig an der Rohrpressklemme angeordnet ist und die Rohrpressklemme einen das Gewinde tragenden zylindrischen Bereich aufweist, an dem sich dann eine konusförmige oder trichterartige Außenkontur (nach außen hin) anschließt, welcher dann von einem wiederum zylindrischen (Spann-) Bereich abgeschlossen wird.

Des Weiteren ist in einer Weiterentwicklung vorgesehen, dass der Flanschbereich eine Durchdringungsöffnung aufweist, durch welche eine ein Außengewinde aufweisende Rohrpressklemme, ein Bolzen, Zapfen oder ähnliches führbar ist, und das Außengewinde mit dem Gewinde der Gewindehülse zusammenwirkt und derart die Seilumlenkung an der Gewindehülse gehalten ist.

Eine solche Ausgestaltung ist sowohl während der Herstellung des Betonfertigteiles wie auch bei dem Transport des Betonfertigteiles von Vorteil, da in diesem Fall die Seilumlenkung auch gleichzeitig als Formteil verwendet werden kann und sich so zum Beispiel ein entsprechender Absatz an der Ausnehmung anformen lässt, der zur Aufnahme eines Verschlussteiles dient. Dabei ist die Seilumlenkung als separates Element ausgebildet und wird dann zum Beispiel durch die Rohrpressklemme an der Seilöse gehalten, wenn das Betonfertigteil über das Lastaufnahmemittel transportiert wird. In dieser Ausführung sind zwei Funktionen möglich. Die Seilumlenkung dient als Formteil bei der Herstellung eines Betonfertigteiles, wobei die Seilumlenkung eine tellerartige Ausnehmung mit ausreichender Randtiefe im Betonfertigteil bildet.

Dabei sind nicht nur Lösungen offenbart, bei welchen die Seilumlenkung als separates Element auf dem Außengewinde der Rohrpressklemme aufschraubbar ist, sie kann zum Beispiel auch auf der Rohrpressklemme, insbesondere auf deren Gewinde, aufpressbar sein, wobei in diesem Fall das Einpressen der Seilumlenkung in das Gewinde eine mechanisch gute Verbindung zwischen der Rohrpressklemme und der Seilumlenkung bildet. Alternativ ist es möglich, dass die Seilumlenkung als separates Element mit der Rohrpressklemme verbindbar, insbesondere zusammenfügbar ist. Eine solche Ausgestaltung hat den Vorteil, dass die Rohrpressklemme und die Seilumlenkung andererseits jeweils optimiert herstellbar sind und dann entsprechend zusammengefügt werden, wobei hierbei zum Beispiel auch ein Verstemm- oder Verpressvorgang vorgesehen ist.

In einer Ausgestaltung ist vorgesehen, dass die Seilumlenkung aus mindestens zwei Teilseilumlenkungen besteht und jede der Teilseilumlenkungen zumindest eine Teilrundung aufweist. Es wurde bereits ausgeführt, dass es von erheblichem konstruktiven Vorteil ist, die vorgesehene Rundung in zumindest zwei Teilrundungen aufzuteilen. Letztendlich liegt dabei das Seilstück nur an einigen wenigen, gegebenenfalls auch voneinander beabstandeten Bereichen der Rundung an dieser an, bereits diese Bereiche gelten als Teilrundungen. In der jetzt vorgeschlagenen Variante wird die Seilumlenkung in mindestens zwei Teilseilumlenkungen aufgeteilt, die gegenständlich auch von einander getrennt sind. Dabei umfasst die Erfindung sowohl eine Lösung, bei welcher die Seilumlenkung (einstückig) zwei oder mehrere Teilrundungen besitzt oder aber die Seilumlenkung aus mehreren Teilseilumlenkungen zusammengesetzt ist und jede der Teilseilumlenkungen zumindest eine Teilrundung aufweist.

Dabei wird vorgesehen, dass die Teilseilumlenkung dann zueinander (räumlich) beabstandet sind. So ist es möglich, dass eine erste Teilseilumlenkung, insbesondere einstückig oder als separates Element, an der Gewindehülse oder der Rohrpressklemme vorgesehen ist. Eine zweite Teilseilumlenkung ist dann zum Beispiel am Bauteil, insbesondere am Betonfertigteil vorgesehen. Durch das geschickte Zusammenwirken von Elementen des Bauteiles beziehungsweise des Betonfertigteiles, namentlich der dort vorgesehenen Ausnehmung, welche die Gewindehülse abgesenkt aufnimmt, wird die Seilumlenkung auf die Rohrpressklemme beziehungsweise der Gewindehülse einerseits, durch Bildung der ersten Teilseilumlenkung, und auf Elemente des Bauteiles im Bereich der Ausnehmung im Betonfertigteil, als zweite Teilseilumlenkung, aufgeteilt.

In einer Variante ist vorgesehen, dass die Seilumlenkung als verlorenes Schalungsteil an der Gewindehülse angeordnet, insbesondere anclipsbar ist. Bei dieser Ausgestaltung verbleibt die Seilumlenkung nach der Herstellung des Betonfertigteiles in diesem.

Bevorzugt ist die Seilumlenkung trichterförmig, insbesondere ähnlich einem Hyperboloid oder einem hyperbolischen Kegel ausgestaltet. Durch eine solche Ausgestaltung wird eine optimale Rundung der Seilumlenkung erreicht.

Bevorzugt ist die Seilumlenkung als Schmiedeteil, als Dreh-, Guß- oder Umformteil oder auch als Senk- beziehungsweise Pressteil ausbildbar. Die Seilumlenkung besteht dabei zum Beispiel aus Metall, insbesondere Stahl oder Guß, aber auch aus Kunststoff, faserverstärktem Kunststoff, Faserzement, Zement, Keramik oder ähnlichem. Geschickter Weise besitzt die Umlenkung eine ausreichende Materialbeschaffenheit, um die Umlenkungskräfte, die bei einem Schrägzug entstehen, aufzunehmen.

Dabei ist es gefunden worden, dass es günstig ist, dass der Mindestradius der Rundung der Seilumlenkung mindestens dem Seildurchmesser, bevorzugt mindestens dem Doppelten des Seildurchmessers entspricht. Werden solche Größenverhältnisse eingehalten, so erfolgt die Seilumlenkung normgerecht und eine Beschädigung des Seiles bei Schrägzug wird sicher vermieden.

In einer bevorzugten Variante ist an der Seilumlenkung auf der der Rundung abgewandten Seite ein Abstützteller vorgesehen. Dieser Abstützteller liegt auf der Begrenzungsfläche auf und führt zu einer großflächigen Abstützung der Seilumlenkung, wodurch hohe Belastungen, gerade des Betons im Randbereich einer Ausnehmung, verringert werden. Eine solche Ausgestaltung steigert die Belastbarkeit der gesamten Anordnung.

In einer Ausgestaltung ist vorgesehen, dass an der Seilumlenkung, im Anschluss an die Gewindehülse, eine Aufweitung vorgesehen ist, die in die Rundung übergeht. Die Anordnung ist dabei so gewählt, dass im Normalfall das Seilstück nicht an den Flankenbereichen der Aufweitung zur Anlage gelangt, sondern das Seilstück sich an der sich anschließenden Rundung anlehnt und die Aufweitung überbrückt. Dabei befindet sich die Aufweitung zwischen der Rundung und dem Gewindeabschnitt. Die Aufweitung führt zu mehr Platz in der Seilumlenkung und zu einer besseren Beweglichkeit der Seilschlaufe. Diese Ausgestaltung ist sowohl bei der Lösung der Seilumlenkung an der Rohrpressklemme, wie auch bei der Lösung an der Gewindehülse möglich. Die Aufweitung kann sowohl bei den Seilumlenkungen, die einstückig mit der Rohrpressklemme beziehungsweise Gewindehülse hergestellt sind, realisiert sein, wie auch bei den Lösungen, bei welchen die Seilumlenkung als separates Element realisiert ist.

In einer Ausgestaltung ist vorgesehen, dass der auslaufende Bereich der Rundung in die Begrenzungsfläche übergeht. Der auslaufende Bereich ist dabei der Bereich der Seilumlenkung, welcher der Gewindehülse abgewandt ist. Geschickter Weise wird dabei ein stetiger Übergang angestrebt, durch welchen entsprechende Knickbereiche zuverlässig vermieden werden, auch wenn solche nach der Erfindung nicht ausgeschlossen werden, aber durch den erfindungsgemäßen Vorschlag in ihrem Knickradius erheblich begrenzt sind.

Nach einer Variante ist die Wandstärke der Seilumlenkung zumindest im Bereich der Rundung im Wesentlichen gleichbleibend. Eine solche Ausgestaltung ergibt sich zum Beispiel, wenn die Seilumlenkung als Pressteil ausgebildet ist und aus einem entsprechend gleichstarken Material hervorgeht. Des Weiteren erlaubt diese Ausgestaltung auch die Variante, dass die Seilumlenkung als separates Element am Betonfertigteil verbleibt oder aber auch abgebaut werden kann, also als Formteil dient, und dann die Ausnehmungsfläche des Betonfertigteiles als Seilumlenkung dient und identische Eigenschaften aufweist wie die Seilumlenkung, die als separates Element realisiert ist.

Es wurde bereits darauf hingewiesen, dass es ein möglicher Aspekt ist, dass sich die Seilumlenkung (einstückig) am Bauteil, insbesondere am Betonfertigteil befindet. Für die Schaffung der Seilumlenkung ist dabei ein Formteil vorgesehen, das als Schalungsteil wirkt und die Bereiche, in welchen das Seilstück aus dem Bauteil beziehungsweise Betonfertigteil austritt, so formt, dass das heraustretende Seilstück einer Rundung folgend abgelenkt oder umgelenkt wird. Dabei umfasst die Erfindung auch Varianten, bei welchen das Formteil als Teilumlenkung beziehungsweise die Seilumlenkung als Formteil wirkt. Geschickter Weise wird in einer Variante vorgeschlagen, dass das Formteil einen, in die Gewindehülse einschraubbaren Verbindungszapfen aufweist. Durch eine solche Variante ist das Formteil, welches zur Bildung der Ausnehmungsflachen (Rundung) vorgesehen ist, positionsgenau an der Gewindehülse positioniert, wo auch später die Seilöse eingedreht wird und dann auch die Rundung zur Verfügung zu stellen ist. Des Weiteren ist es möglich, dass die Gewindehülse über das Formteil an der Schalung befestigt wird.

Für die Ausgestaltung des Formteiles gibt es mehrere Varianten. Zunächst ist vorgesehen, dass das Formteil dünnwandig ausgebildet ist und zum Beispiel aus einem Stanz- oder Biegeprozess stammt. Es ist aber auch möglich, dass das Formteil aus Vollmaterial besteht. Die dünnwandige Ausgestaltung hat des Weiteren den Vorteil, dass Material und Gewicht für die Bildung des Formteiles gespart wird.

Die Befestigung des Formteiles (gegebenenfalls mit der Gewindehülse) an der Schalung erfolgt durch ein an dem Formteil angeordnetes Befestigungsmittel, dies kann zum Beispiel eine Gewindebohrung oder ähnliches sein. Durch eine solche Ausgestaltung wird der Herstellungsprozess eines Bauteiles, insbesondere eines Betonfertigteiles, erheblich reduziert. Hierzu werden Gewindehülsen, die zum Beispiel mit einem entsprechenden Transportanker, der in das Betonfertigteil einsteht, mit Hilfe des Formteiles nach der Erfindung in der Schalung verbunden.

Gemäß einer Ausführung ist vorgesehen, dass die Gewindehülse gegenüber der Begrenzungsfläche des Bauteiles in diese zurückgesetzt ist und hierfür in der Begrenzungsfläche eine Ausnehmung vorgesehen ist und in die Ausnehmung eine bevorzugt ringartige Seilumlenkung einlegbar ist. Durch die Anordnung der Ausnehmung wird bereits eine gewisse Sicherung gegen Verlust der Seilumlenkung realisiert, die Seilumlenkung kann daher zum Beispiel auch lose, aber passgenau in die Ausnehmung eingelegt werden. Natürlich ist es möglich bei einer solchen Variante auch eine entsprechende zusätzliche Befestigung der Seilumlenkung mit der Gewindehülse und/oder der Rohrpressklemme und so weiter vorzusehen. In einem solchen Ausführungsbeispiel ist die Seilumlenkung ebenfalls wiederverwendbar. Auch eine Klemmpassung des Ringes in der Ausnehmung ist in einer Variante vorgesehen.

Vorteilhafterweise ist das Formteil oder die Seilumlenkung zumindest abschnittsweise hülsenartig ausgebildet und insbesondere bevorzugt auf die Gewindehülse aufsteckbar. Neben der Variante, dass das Formteil in die Gewindehülse eindrehbar ist, wird nach dieser Variante das andere Konzept vorgeschlagen, nämlich dass das Formteil auf die Gewindehülse aufsteckbar ist. Gegebenenfalls kann natürlich auch eine Gewindeverbindung vorgesehen sein (in diesem Fall trägt die Gewindehülse auch ein Außengewinde).

Es wird des Weiteren ein Lastaufnahmemittel vorgeschlagen, bei welchem das Formteil eine tellerartige Ausnehmung mit ausreichender Randtiefe im Betonfertigteil bildet. Durch eine solche Ausgestaltung ist es möglich, dass die sich bildende Ausnehmung durch einen entsprechenden Verschlussteller korrosions- und feuchtigkeitssicher verschließbar ist.

In einer Variante ist eine Rastnase an dem Formteil beziehungsweise der Seilumlenkung vorgesehen, welche in eine entsprechende Aufnahmekerbe der Gewindehülse beim Aufstecken des Formteiles beziehungsweise der Seilumlenkung auf die Gewindehülse haltend eingreift. Diese formschlüssige Verbindung zwischen Seilumlenkung beziehungsweise Formteil einerseits und Gewindehülse andererseits stellt die dritte Variante der Verbindung dieser beiden Bauteile vor, wobei das normale Aufstecken eine klemmende Verbindung, also nur kraftschlüssig ist und die Schraubverbindung durch Einschrauben die beiden Bauteile befestigt. Dabei ist das Formteil beziehungsweise die Seilumlenkung ausreichend flexibel, derart, dass die Rastnase zunächst zurückgebogen werden kann, um dann in eine entsprechende Aufnahmekerbe einzuschnappen. Eine solche Anordnung kann auch als Einschnapp- oder Einclipsmechanismus verstanden werden.

Es ist klar, dass auch die kinematische Umkehr möglich ist, also Lösungen, bei welchen das Formteil oder die Seilumlenkung eine Aufnahmekerbe aufweist und die Gewindehülse eine entsprechende Rastnase zur festen Verbindung aufweist.

Eingangs wurde bereits darauf hingewiesen, dass sowohl Anordnungen möglich sind, bei welchen die Seilöse durch die Gewindeverbindung mit einer Gewindehülse, die im Betonfertigteil einbetoniert ist, gebildet ist, oder aber die Seilöse ist derart im Bauteil anordenbar, dass die Rohrpressklemme im Bauteil oder andere Bereiche des Seilstückes im Bauteil festlegbar ist/sind. In diesem Fall ist die Seilöse im Bauteil festgelegt und nur durch dessen Zerstörung wieder ausbaubar. Eine solche Ausgestaltung führt dazu, dass Seilstücke der Seilöse an zwei beabstandeten Stellen, der Eintritts- und der Austrittsstelle, aus dem Betonfertigteil einbeziehungsweise austreten und dort je eine Seilumlenkung vorgesehen ist, da an diesen Stellen grundsätzlich das Problem besteht, dass das Seilstück abknickt.

Die Anordnung der Seilöse ist dabei oftmals so gewählt, dass die Rohrpressklemme im Bauteil angeordnet ist, ohne aber die Erfindung hierauf zu beschränken. Es besteht auch die Möglichkeit, dass die Rohrpressklemme von außen nach wie vor zugänglich bleibt.

Geschickter Weise ist es erfindungsgemäß vorgesehen, dass die beiden Seilumlenkungen an einem aus mindestens zwei Formteilelementen bestehenden Formteilsatz vorgesehen sind. Erfindungsgemäß umfasst also das Formteil in diesem Anwendungsbereich auch einen Formteilsatz, der so ausgebildet ist, dass das Seilstück zwischen den beiden Formteilelementen angeordnet werden kann beziehungsweise von diesen gehalten ist.

Hierzu ist geschickter Weise vorgesehen, dass zumindest zwei zusammenwirkende Formteilelemente eine ein Seilstück aufnehmende Öffnung bilden. Natürlich ist es auch möglich, ein aus Kunststoff bestehendes Formteil um das Seilstück herum an dieses anzuspritzen, und somit eine einstückige Ausgestaltung zu erreichen. Allerdings ist dann eine Entfernung des Formteiles nur durch dessen Zerstörung möglich, weswegen es günstig ist, einen Formteilsatz vorzusehen, dessen Formteilelemente durch entsprechende Verbindungselemente miteinander verbindbar sind. In einer Variante ist es dabei vorgesehen, dass der Formteilsatz insbesondere zur Aufnahme oder Freigabe der Seilstücke zu öffnen oder zu schließen ist. Durch eine solche Ausgestaltung wird erreicht, dass der erfindungsgemäß vorgeschlagene Formteilsatz ebenfalls mehrfach verwendbar ist und das Formteil, nachdem die entsprechende Ausnehmungsfläche an dem Betonfertigteil gebildet ist (wodurch die Seilöse in dem Betonfertigteil auch festgelegt ist), dieses in einfacher Weise, ohne Rückstände zu hinterlassen, demontierbar ist.

Die Anordnung ist dabei so gewählt, dass die Formteilelemente ausreichend mechanisch stabil miteinander verbindbar sind, derart dass das gemeinsame Formteil beziehungsweise der Formteilsatz für eine Befestigung der Seilöse an der Betonschalung dient.

Hierzu sind entsprechende Befestigungsöffnungen an dem gemeinsamen Formteil beziehungsweise dem Formteilsatz vorgesehen. Des Weiteren ist natürlich die Anordnung so gewählt, dass auch alternativ eine kastenartige Vertiefung vorgesehen ist, um die Seilschlaufe, die aus dem Betonfertigteil hervorsteht, während des Schalprozesses umzulegen und einen bündigen Anschluss des Formteiles an die Schalung zu erreichen.

Die Anordnung ist dabei so gewählt, dass das gemeinsame Formteil beziehungsweise der Formteilsatz zum Abdichten zwischen Seilöse und Betonschalung dient. So wird vermieden, dass Beton in diesen Bereich einläuft.

Geschickter Weise ist des Weiteren erfindungsgemäß vorgesehen, dass der Formteilsatz aus zwei, im Wesentlichen identischen Formteilelementen besteht. Eine solche Ausgestaltung hat fertigungstechnische Vorteile, da die beiden identischen Formteilelemente aus der gleichen Herstellungsform stammen. Es ist klar, dass sowohl das Formteil, welches für die Bildung der Seilumlenkung unter Verwendung einer einschraubbaren Seilöse Verwendung findet, wie auch das Formteil, welches als gemeinsames Formteil (für die Bildung zweier Seilumlenkungen), oder der Formteilsatz jeweils die gleichen Probleme löst, nämlich sie dienen der Schaffung einer Seilumlenkung für das oder die Seilstück/e.

Daher ergibt es sich auch, dass das Formteil, der Formteilsatz beziehungsweise die Formteilelemente wahlweise aus Metall beziehungsweise Stahl oder Guß, Kunststoff, faserverstärktem Kunststoff, Faserzement, Zement, Keramik oder ähnlichen Materialien bestehen. Die geeignete Materialienwahl ergibt sich aufgrund des Einsatzbereichs, aber auch aufgrund der gewünschten Gestaltung der Seilumlenkung. Natürlich sind auch andere Metalllegierungen außer den genannten Stahl oder Guß möglich und offenbart.

In einer weiteren Ausgestaltung der Erfindung wird vorgeschlagen, dass das Formteil, der Formteilsatz beziehungsweise die Formteilelemente als verlorenes Schalungsteil ausgebildet ist und wahlweise als Seilumlenkung dient.

Um eine höhere Ermüdungsfestigkeit des Seiles beziehungsweise Seilstückes zu erreichen, wird vorgeschlagen, mehr als 120 Einzeldrähte, insbesondere mehr als 140 Einzeldrahte zur Bildung eines Seilstückes vorzusehen, wobei das Seilstück einen Durchmesser von bis zu 14 mm aufweist. Bei einem Seildurchmesser von mehr als 14 mm wird vorgeschlagen, dass das Seilstück mehr als 220 Einzeldrähte, insbesondere mehr als 250 Einzeldrähte aufweist. Die Erhöhung der Anzahl der Einzeldrähte in dem (Draht) Seil führt dazu, dass Einzeldrähte mit jeweils kleineren Durchmessern verwendet werden können, durch welche sich eine Feingliedrigkeit der Drähte, der Litzen und der Seile ergibt. Bei der Ausgestaltung des Seiles wird dieses zum Beispiel aus Litzen gebildet, die aus Einzeldrähten bestehen. Die Feingliedrigkeit ist dafür verantwortlich, dass die Seile letztendlich weniger steif sind und so die Ermüdungsfestigkeit des Seiles höher ist.

Des Weiteren ist auch ein Bauteil offenbart, insbesondere ein Betonfertigteil, welches mit einem Lastaufnahmemittel, wie beschrieben, ausgestattet ist. Des Weiteren ist auch ein Bauteil offenbart, insbesondere ein Betonfertigteil, welches von Begrenzungsflächen begrenzt ist, wobei in der Begrenzungsfläche mindestens eine Ausnehmung vorgesehen ist, aus welcher mindestens ein Seilstück heraustritt und die die Ausnehmung begrenzende Ausnehmungsfläche als Seilumlenkung gebildet ist, um das Seilstück einer Rundung folgend umzulenken. Die Ausnehmungsfläche ist zum Beispiel, wie beschrieben, durch ein Formteil entstanden.

Des Weiteren ist auch ein Bauteil offenbart, insbesondere eine Betonfertigteil, welches von Begrenzungsflächen begrenzt ist, wobei in dem Bauteil, von der Begrenzungsfläche in das Innere des Bauteiles zurückgesetzt, an einer Ausnehmung des Betonfertigteiles anschließend eine Gewindehülse vorgesehen ist, die zur Aufnahme einer Seilöse dient, wobei eine Seilumlenkung vorgesehen ist, die dazu dient, das Seilstück der Seilöse, das sich in einem Umlenkungsbereich an dem Gewinde anschließt, einer Rundung folgend umzulenken.

In einer speziellen Ausgestaltung ist dabei vorgesehen, dass die Seilumlenkung während der Herstellung des Betonfertigteiles als Formteil zur Ausbildung der Ausnehmung dient. Die daraus resultierende Ausnehmung wird dann durch einen Verschlussteller verschlossen.

In den Zeichnungen sind eine Mehrzahl von Ausführungsbeispielen schematisch gezeigt. Es zeigen:
- Fig. 1a, 1b, 2a, 2b, 3a: jeweils in einem vertikalen
- 3b, 4a, 4b, 15a, 15b: Schnitt, in einer Einbausitution verschiedene Varianten des Lastaufnahmemittels in einer ersten Stellung der Seilöse (Fig. 1a, 2a, 3a, 4a, 15a) und in einer zweiten Stellung mit abgewinkelter Seilöse (Fig. 1b, 2b, 3b, 4b, 15b)
- Fig. 3c: in vertikalem Schnitt das Lastaufnahmemittel nach Fig. 3a,
- Fig. 5, 6, 11, 12, 13, 14,: jeweils in einem vertikalen
- 16: Schnitt verschiedene Variante des Lastaufnahmemittels ohne Seilstück,
- Fig. 7 und Fig. 10a: jeweils in einem vertikalen Schnitt den Einsatz eines Formteiles zur Bildung einer Ausnehmung, in welchem dann eine Seilumlenkung, insbesondere nach Fig. 10b einlegbar ist,
- Fig. 10b: in einem vertikalen Schnitt das Lastaufnahmemittel ohne Seilstück,

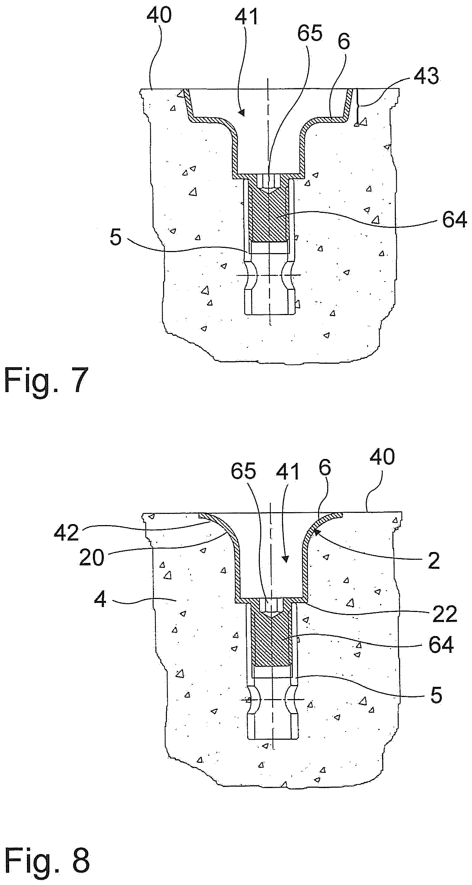

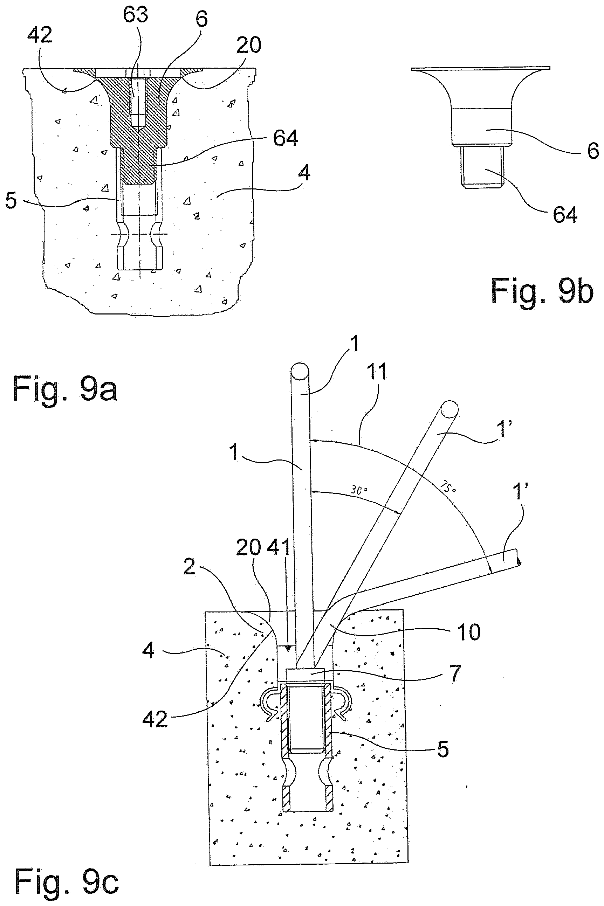

- Fig. 8, Fig. 9a: jeweils in einem vertikalen Schnitt die Verwendung eines Formteiles zur Bildung einer Seilumlenkung an der Ausnehmungsfläche der Ausnehmung im Betonfertigteil, Fig. 9b in einer Ansicht das Formteil nach Fig. 9a,
- Fig. 9c: das Lastaufnahmemittel in einer weiteren Variante, wobei die Seilumlenkung durch ein Formteil nach Fig. 9a, 9b gebildet ist und

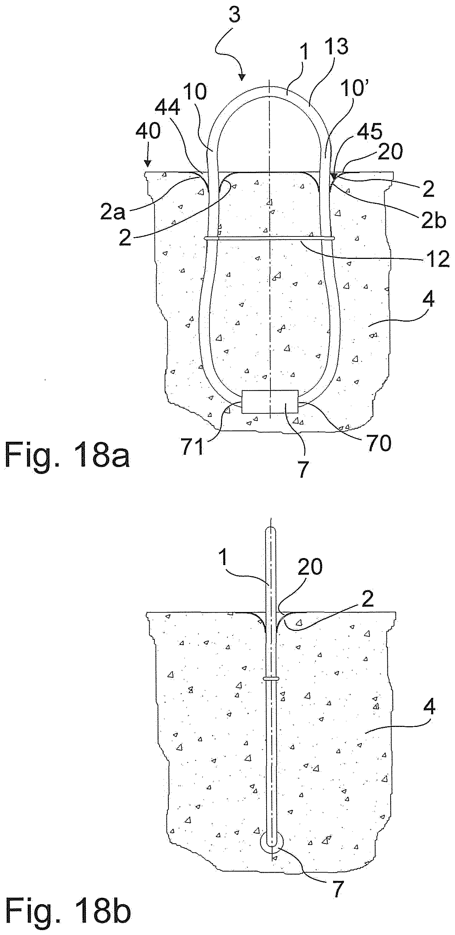

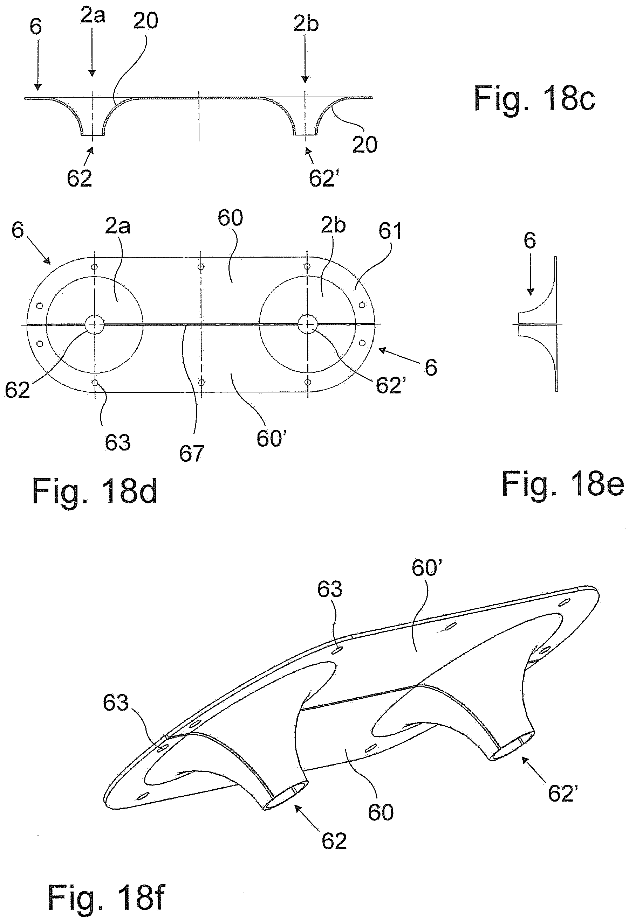

- Fig. 18a, 18b, 18c, 18d,: eine weitere Variante des
- 18e, 18f: Lastaufnahmemittels in verschiedenen vertikalen Schnittdarstellungen (Fig. 18a, 18b) und Detailansichten dieser Variante in Ansicht (Fig. 18c, 18d, 18e) sowie in dreidimensionaler Ansicht (Fig. 18f) ;

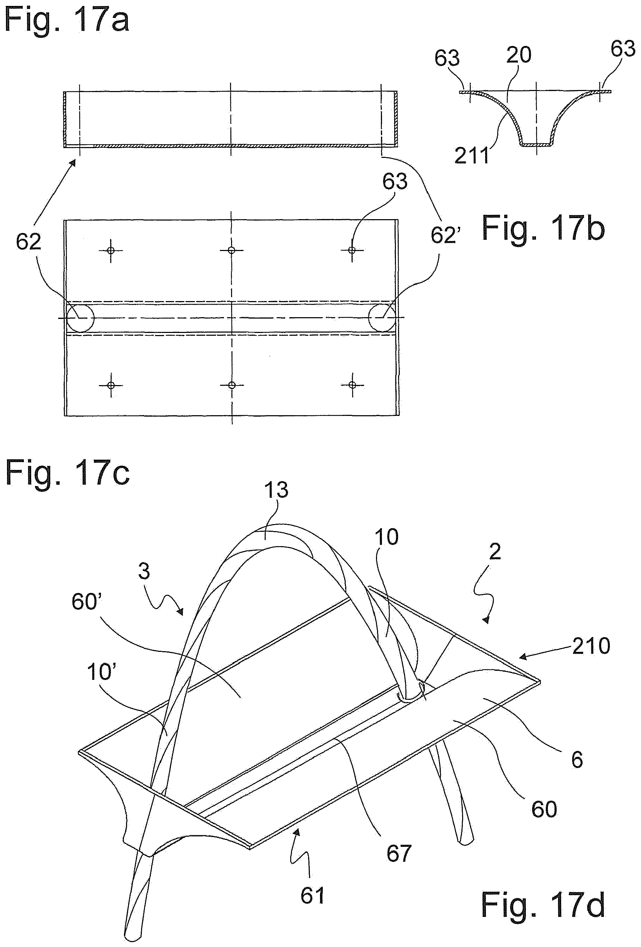

- Fig. 17a, 17b, 17c, 17d: eine weitere Variante des Lastaufnahmemittels in verschiedenen vertikalen Schnittdarstellungen (Fig. 17a, 17b, 17c) sowie in dreidimensionaler Ansicht (Fig. 17d),

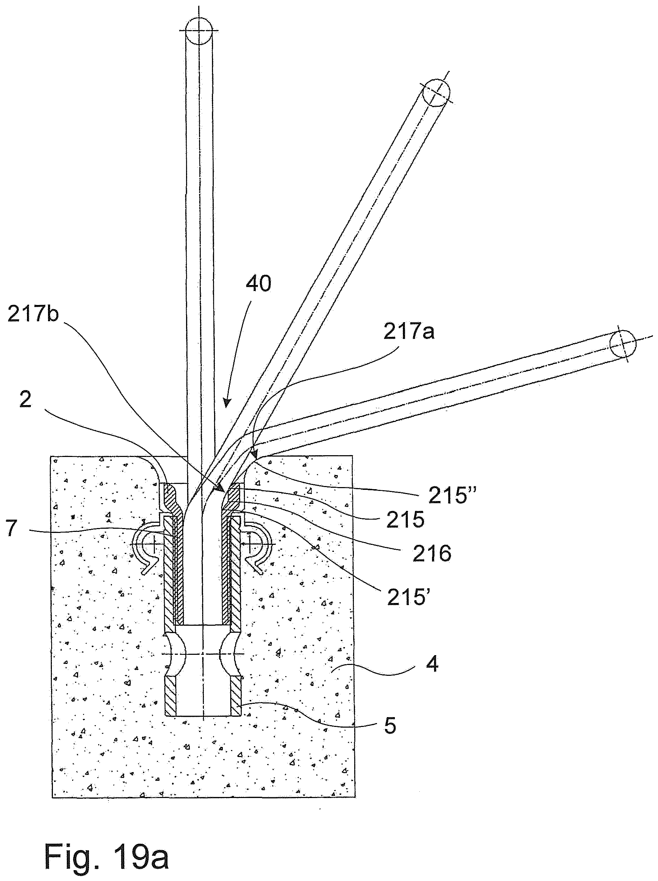

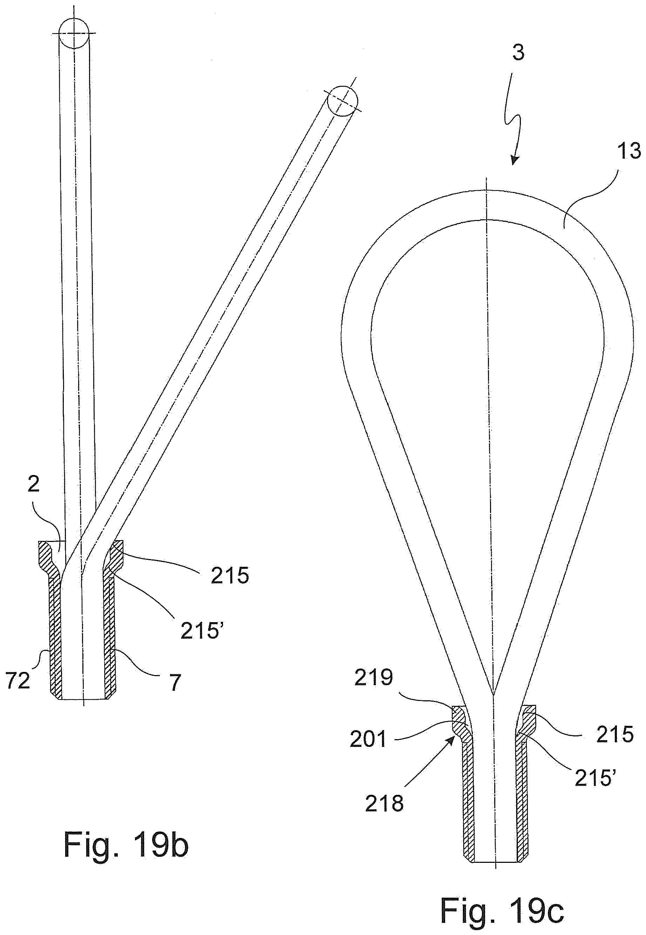

- Fig. 19a, 19b, 19c: eine weitere Variante des Lastaufnahmemittels in verschiedenen Ansichten.

Es sei an dieser Stelle erwähnt, dass die Figuren 17 und 18 Ausführungsbeispiele zeigen, welche von den Ansprüchen beansprucht sind. Die anderen Figuren zeigen Ausführungsbeispiele, welche beispielsweise als allgemeine Information dienen.

In den Figuren sind gleiche oder einander entsprechende Elemente jeweils mit den gleichen Bezugszeichen bezeichnet und werden daher, sofern nicht zweckmäßig, nicht erneut beschrieben.

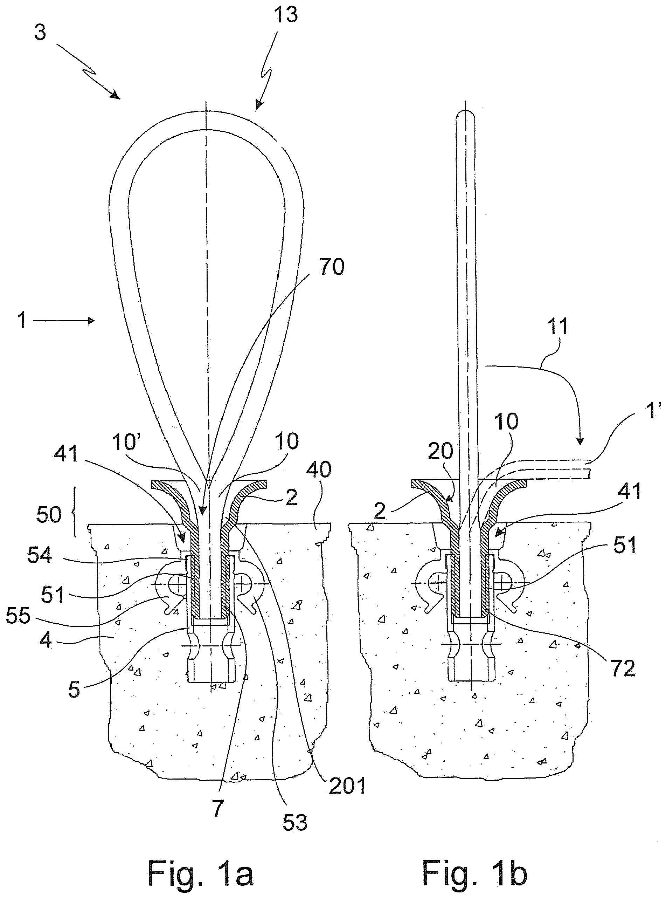

Fig. 1a, 1b zeigt in einer ersten Variante des Lastaufnahmemittels 3.

Das Lastaufnahmemittel 3 besteht dabei aus einem Seilstück 10, 10' und einer Seilumlenkung 2, die dazu dient, das aus dem Bauteil 4 herausstehende Seilstück 10, 10 ' einer Rundung 20 folgend umzulenken.

Das in Fig. 1a, 1b gezeigte Seilstück 10, 10' ist dabei Teil einer Seilöse 1.

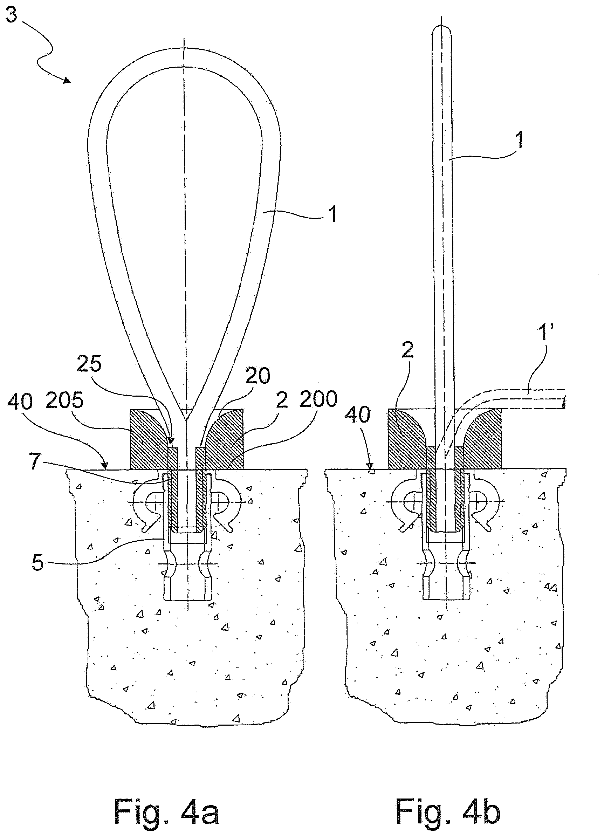

Diese Seilöse 1 ist gebildet aus einer Rohrpressklemme 7, in welche die beiden Seilstückenden 10, 10' im Wesentlichen parallel zueinander verlaufend, an der gleichen Seite 10 der Rohrpressklemme eingelegt sind und dann durch ein radiales Verpressen nach innen fest miteinander verbunden werden. Dabei quetscht sich die Wandung der Rohrpressklemme 7 zwischen die Litzen des Stahldrahtseiles, aus welchem das Seilstück 10, 10' besteht und ergibt so eine sehr feste, mechanisch hoch belastbare Verbindung. Die Rohrpressklemme 7 besitzt ein Außengewinde 72. In dem Bauteil 4, das insbesondere als Betonfertigteil 4 ausgebildet ist, ist im Randbereich des Bauteiles eine Gewindehülse 5 angeordnet. Die Gewindehülse 5 schließt dabei ihre Vorderseite bündig ab mit der Begrenzungsfläche 40 des Bauteiles 4, wie dies zum Beispiel in Fig. 4a, 4b angedeutet ist. Es sind aber auch Varianten bekannt, bei welchen die Gewindehülse 5 bezüglich deren Begrenzungsfläche 40 etwas zurückgesetzt im Inneren des Bauteiles 4 vorgesehen ist und daher die Begrenzungsfläche 40 in diesem Bereich eine Ausnehmung 41 aufweist. Die Gewindehülse 5 trägt an ihrer Außenmantelfläche ein Verbindungselement 53, das zum Beispiel als Kunststoffspritzteil ausgebildet ist, einen Aufsteckring 54 aufweist, welcher auf die Außenseite der Gewindehülse 5 aufgeschoben werden kann.

An dem Aufsteckring 54 nach unten vorstehend sind, jeweils einander gegenübergesetzt, zwei in Ansicht ungefähr halbkreisartige Elemente 55 vorgesehen, mit welchen das Verbindungselement 53 mit Bewährungseisen verbunden werden kann. Die Bewährungseisen verlaufen dabei zum Beispiel parallel zur Begrenzungsfläche 40 und können in die halbkreisartige Ausnehmung des Elementes 55 eingedrückt werden. Das Verbindungselement 53 besteht daher bevorzugt aus Kunststoff, dessen Elastizität ein entsprechendes Aufschieben auf den Bewährungsstab erlaubt. Alternativ ist es natürlich möglich, dass das Verbindungselement 53 aus Metall, zum Beispiel einem biegbaren Blech oder ähnlichem besteht.

Die Ausgestaltung des Lastaufnahmemittels 3 ist dabei so gewählt, dass das Außengewinde 72 der Rohrpressklemme 7 im Gewinde 51 der Gewindehülse 5 eingedreht werden kann. Die Seilöse 1, die aus der Seilschlaufe 13 gebildet ist und dessen Seilstück 10, 10 ', insbesondere deren Enden in der Rohrpressklemme 7 miteinander fest verbunden sind, ergeben damit einen Aufnahmepunkt zum Anschlagen eines Hebemittels, zum Beispiel eines Kranhakens eines Transportkranes oder ähnlichem. Nun kann es sich ergeben, dass die Anhebkraft des (nicht gezeigten) Anschlagmittels nicht vertikal nach oben, insbesondere rechtwinklig zur Begrenzungsfläche 40 an der Seilschlaufe 13 angreift, sondern schräg hierzu, also in einem spitzen Winkel bezogen zur Begrenzungsfläche 40. Nach den Lösungen des Standes der Technik liegen dann die Seilstücke 10, 10' insbesondere in einem Umlenkungsbereich 50 an rechtwinklig geformten Kanten an und werden dort aufgrund der erheblichen Krafteinwirkung in der Seilschlaufe 13 (die erhebliche Last des Bauteiles 4 soll angehoben werden) regelrecht abgeknickt.

Um dies zu vermeiden, wird an dem Lastaufnahmemittel 3 eine Seilumlenkung 2 vorgeschlagen, die zum Beispiel, wie hier gezeigt, im Wesentlichen trichterförmig ausgebildet ist und eine dem Seilstück 10, 10' zugewandte Rundung besitzt, an welcher das Seilstück im Falle eines Schrägzuges (siehe zum Beispiel Fig. Ib) derart anliegt, dass ein schädliches Abknicken des Seilstückes 10 im Umlenkbereich 50 zuverlässig vermieden wird. Die aus dem Schrägzug resultierende Abwinklung 11 ist in Fig. 1b angedeutet. Durch die Ausführung ist es grundsätzlich möglich, dass sogar eine Zugbewegung parallel zur Begrenzungsflache 40 für die Seilöse schadlos erfolgen kann. Es ist klar, dass eine Unterstützung der Abwinklung 11 der Seilöse 1 nur in dem Seilstückbereich möglich ist, der aus dem Betonfertigteil beziehungsweise Bauteil 4 beziehungsweise aus der Rohrpressklemme 7 heraussteht. Dieser Umstand wird allgemein mit der Formulierung abgedeckt, dass das Seilstück aus dem Beton herausstehen muss und natürlich für eine entsprechende Abwinklung 11 ausreichend freibeweglich ist. Hieraus ergibt sich ein Umlenkungsbereich 50, wie er in Fig. 1a schematisch angedeutet ist und der natürlich je nach Lage der Seilumlenkung 2 bezogen auf das Betonfertigteil 4 in seiner Lage variabel ist.

Es wird in weiteren Ausführungsbeispielen noch gezeigt werden, dass die Seilumlenkung nicht über die Begrenzungsfläche des Betonfertigteiles hervorsteht oder, wie hier, entsprechend von der Begrenzungsfläche 40 beabstandet ist.

In dem in Fig. 1a, 1b gezeigten Lastaufnahmemittel 3 ist die Anordnung so gewählt, dass die Seilumlenkung 2 einstückig an der Rohrpressklemme 7 angeformt ist. Die Ausgestaltung ist dabei so gewählt, dass an dem unteren Ende der Rohrpressklemme 7, aus welchem keine Seilstücke 10, 10' herausgeführt sind, an der Außenseite das Außengewinde 72 angeordnet ist. Im oberen Bereich, in Fig. 1a mit 70 gekennzeichnet, schließt sich die trichterförmige Seilumlenkung 2 an. Der Trichter ist in seiner Ausgestaltung mit einem größeren Durchmesser ausgestattet wie das Gewinde 72.

Die einstückige Ausgestaltung der Rohrpressklemme 7 mit der Seilumlenkung 2 kann in dem Herstellungsprozess der mit der Rohrpressklemme 7 verbundenen Seilöse 1 einfach integriert werden. Der Vorteil dieser Variante liegt darin, dass die Seilumlenkung 2 unverlierbar in dem zu schützenden Seilstück vorgesehen ist und somit insbesondere im Belastungsfalle unter Schrägzug zur Verfügung steht. In dem Bereich, in welchem die Seilstücke 10, 10' aus der Rohrpressklemme 7 heraustreten, ist zunächst eine Aufweitung 201 vorgesehen, die durch einen konischen Bereich gebildet ist, an der sich dann in einem unstetigen Übergang mit einem stumpfen Übergangswinkel der Bereich der Rundung 20 anschließt. Wie in Fig. 1b gezeigt, ergibt sich dann im Abwinklungsfall die Situation, dass das Seilstück 10 im Bereich der Aufweitung 201 nicht an der Seilumlenkung anliegt. Dieser sich ergebende Freiraum ist günstig, da dann Schmutzpartikel, Beton, Mörtelreste usw., die unter Umständen in der trichterförmigen Seilumlenkung zu liegen kommen können, in diesen Freiraum verdrängt werden können und so einen zuverlässigen Schutz vor einer Beschädigung der Seilöse ergeben beziehungsweise das Risiko einer entsprechenden Beschädigung verringert wird.

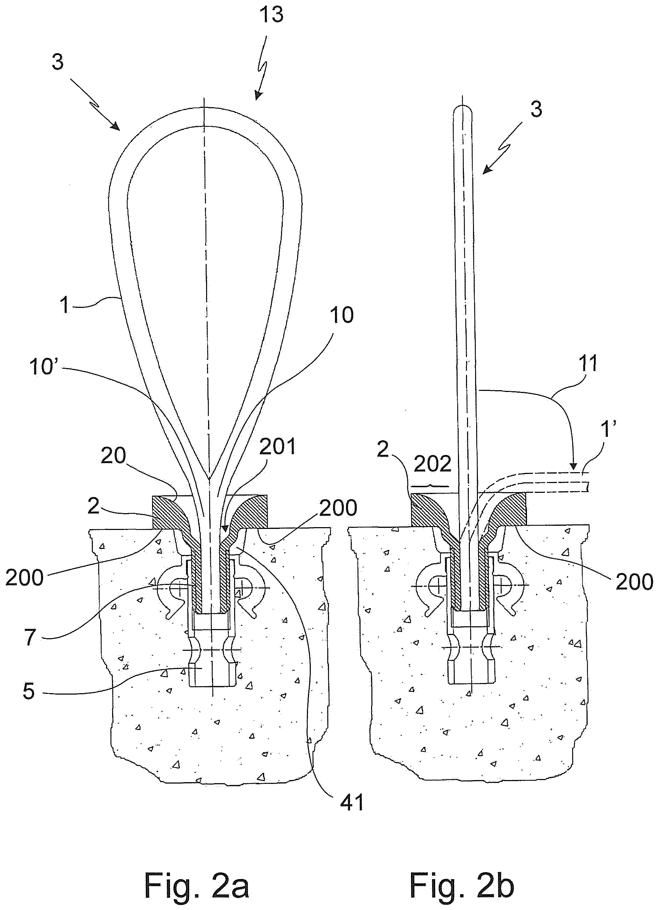

In Fig. 1b ist die nach der Abwinklung 11 gezeigte Seilhülse mit der Bezugsziffer 1' gekennzeichnet. In Fig. 2a, 2b ist eine alternative Ausgestaltung des Lastaufnahmemittels 3 gezeigt. Die hier gezeigte Variante baut im Wesentlichen auf den Vorschlag nach Fig. 1a, 1b auf. Auch in der hier gezeigten Variante befindet sich die Seilumlenkung 2 einstückig an der Rohrpressklemme 7 angeformt. Der Unterschied zwischen den beiden Varianten nach Fig. 1a, 1b beziehungsweise Fig. 2a, 2b liegt darin, dass die Seilumlenkung 2 nach Fig. 1a von einem im Wesentlichen rohrartigen Rohstück ausgebildet wurde, also einem Teil, das im Wesentlichen gleiche Wandstärke aufweist. Das in Fig. 2a, 2b gezeigte Teil ist hingegen zum Beispiel als Drehteil gebildet oder anderweitig spanend oder kalt umgeformt hergestellt.

Insbesondere unterscheidet sich die Variante der Seilumlenkung 2 nach Fig. 2a, 2b dadurch, dass der radiale Randbereich 202 eine höhere Wandstärke aufweist wie im Übergangsbereich der Seilumlenkung 2 zur Rohrpressklemme 7 hin. Hieraus resultiert, dass sich die Seilumlenkung 2 mit einer Abstützfläche 200 auf der Begrenzungsfläche 40 des Bauteiles 4 abstützt beziehungsweise auf diesem aufliegt. Dabei ist die Abstützflache 200 ringartig um die Rohrpressklemme 7 herum gebildet. Im Falle eines Schrägzuges wird somit erreicht, dass sich die Seilumlenkung 2 an dem Betonfertigteil beziehungsweise Bauteil 4 abstützt. Dabei befindet sich diese Abstützfläche 200 auf der der Rundung 20 gegenüberliegenden Seite der Seilumlenkung 2.

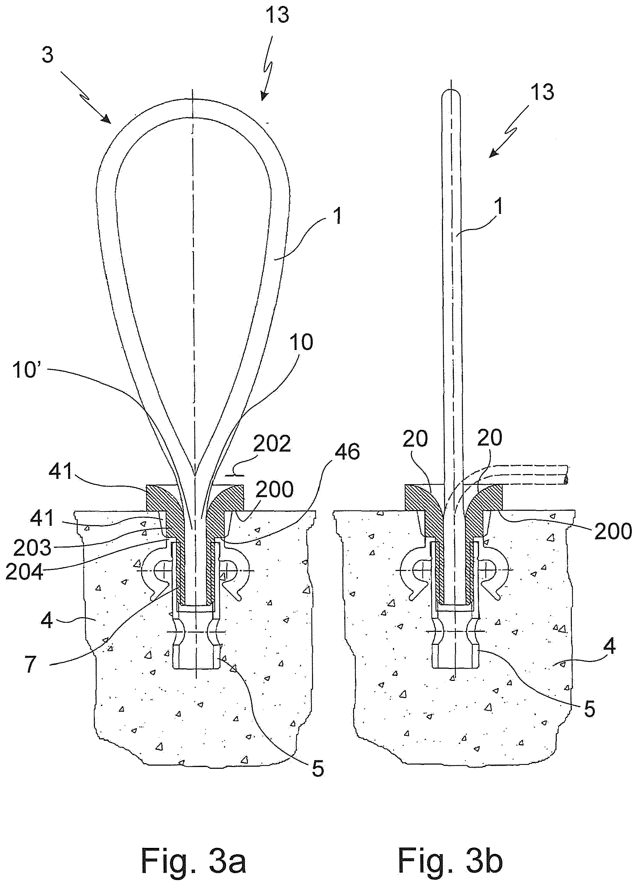

Fig. 3a, 3b baut auf den Vorschlag nach Fig. 2a, 2b weiter auf. Auch die hier vorgestellte Seilumlenkung 2 ist einstückig mit der Rohrpressklemme 7 ausgebildet. Im Randbereich 202 ist eine Abstützfläche 200 vorgesehen, an der sich, in die Ausnehmung 41 des Bauteiles 4 vorstehend ein Absatz 203 anschließt. Die untere Abschlussfläche 204 des Absatzes 203 stützt sich dabei zusätzlich auf der Bodenfläche 46 der Ausnehmung 41 ab. Diese Bodenfläche 46 der Ausnehmung ist gegebenenfalls auch identisch mit der Oberfläche der Gewindehülse 5, je nach dem wie die Anordnung hier gewählt ist. Durch diese Ausgestaltung wird erreicht, dass sich die Seilumlenkung 2 über dessen ringartigen oder hülsenartigen Absatz 203 direkt abzustützen vermag und somit zusätzlich die Belastbarkeit der Anordnung erhöht wird.

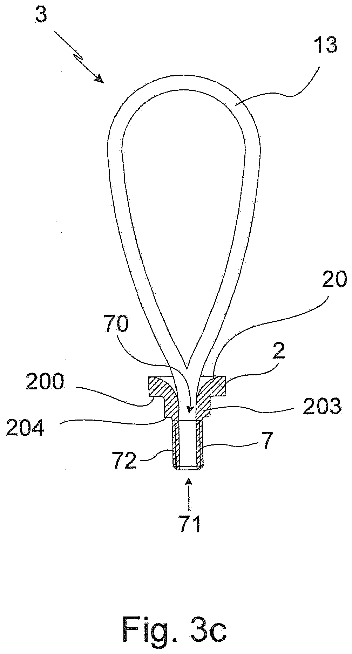

In Fig. 3c ist das Lastaufnahmemittel 3, ohne in die Gewindehülse 5 eingeschraubt zu sein, also nicht mit dem Betonbauteil 4 verbunden, gezeigt. Die Seilschlaufe 13 ist mit seinen beiden Enden 10, 10' an der gleichen Seite 70 der Rohrpressklemme 7 in diese eingeführt worden und dort verpresst. Das zweite Ende 71 der Rohrpressklemme 7 ist daher offen beziehungsweise es tritt kein Seilstück aus ihr hervor. Gut ist das Außengewinde 72 auf der Mantelfläche der Rohrpressklemme 7 zu erkennen, an deren oberen, der Seilschlaufe 13 zugewandten Ende sich die die Rohrpressklemme 7 flanschartig umgebende Abschlussfläche 204 anschließt, die die untere Begrenzungsfläche des Absatzes 203 darstellt. Der Absatz 203 ist bereits Teil der Seilumlenkung 2, die einstückig mit der Rohrpressklemme 7 verbunden ist und auf ihrer Innenseite trichterförmig ausgebildet, die Rundung 20 für die Seilschlaufe 13 bei deren Schrägzug zur Verfügung stellt.

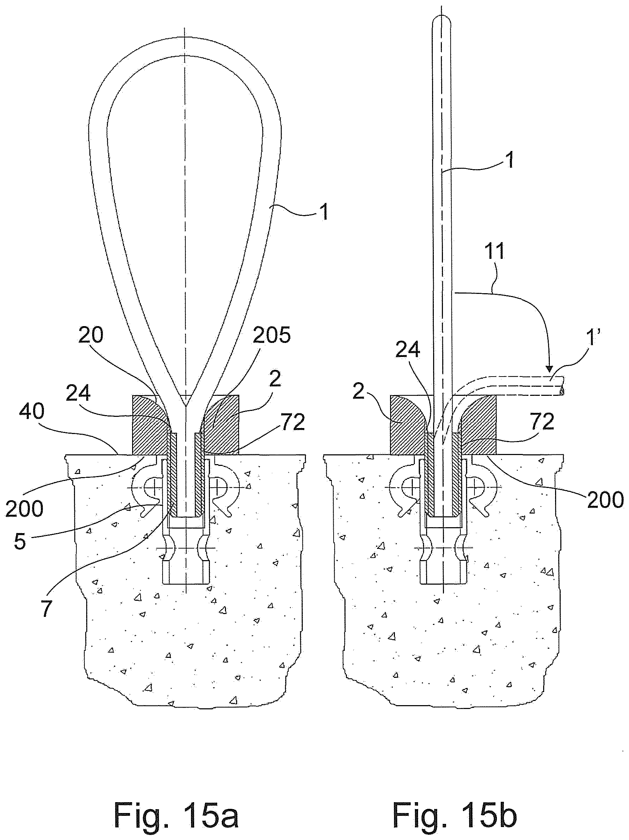

Die Varianten des Lastaufnahmemittels 3 nach Fig. 4a und 4b und Fig. 15a beziehungsweise 15b sind in ihrem Aufbau verhältnismäßig ähnlich. Die Anordnung ist hier so gewählt, dass die Gewindehülse 5 in ihrem vorderen Ende bündig mit der Begrenzungsfläche 40 des Bauteiles 4 abschließt. Das heißt in diesen Ausführungsvarianten ist keine Ausnehmung 41 vorgesehen.

In den Varianten nach Fig. 1a, 1b bis 3a, 3b und 3c war die Seilumlenkung 2 einstückig an die Rohrpressklemme 7 angefügt und auch in einem gemeinsamen Herstellverfahren geschaffen worden. Dies ist aber nicht notwendigerweise die einzige Variante, wie die trichterförmige Seilumlenkung 2 zur Verfügung gestellt werden kann. Die in Fig. 4a, 4b beziehungsweise 15a, 15b gezeigte Variante zeigt eine insbesondere ringförmig gestaltete Seilumlenkung 2, 205, die als separates Element, getrennt von der Rohrpressklemme 7 hergestellt ist und hernach in geeigneter Weise mit dieser verbindbar ist. Bei dem in Fig. 4a, 4b gezeigten Ausführungsbeispiel ist zum Beispiel ein Klemmsitz 25 zwischen der ringförmigen 205 Seilumlenkung 2 und der Rohrpressklemme 7 vorgesehen. Alternativ kann hierzu natürlich auch ein anderes Fügeverfahren Verwendung finden.

In der alternativen Variante nach Fig. 15a, 15b, die sehr ähnlich zu der Variante nach Fig. 4a, 4b ist, wird die Verbindung zwischen der Seilumlenkung 2 und der Rohrpressklemme 7 über ein Gewinde 24 hergestellt. Hierzu ist an der Rundung 20 innen anschließend an der Seilumlenkung ein Innengewinde 24 vorgesehen, das so bemessen ist, dass die gesamte Anordnung auf das Außengewinde 72 der Rohrpressklemme 7 aufschraubbar ist. Praktischerweise ist dabei die Rohrpressklemme 7 deutlich länger, auch mit einem Außengewinde 72 ausgestattet, wie die Höhe der ringförmigen Seilumlenkung 2, 205, damit die Rohrpressklemme von oben, an der Rundung beginnend, durch die Seilumlenkung durchgeschraubt werden kann, derart, dass die Rohrpressklemme 7 dann unten aus der Seilumlenkung 2 hervorsteht und so in die Gewindehülse 5 in bekannter Weise eingeschraubt werden kann.

Die in Fig. 4a, 4b, 15a, 15b gezeigte ringförmige Seilumlenkung 2, 205 besitzt dabei eine der Begrenzungsfläche 40 zugewandte Abstützfläche 200, die ähnlich der Varianten nach Fig. 2a, 2b, 3a, 3b ein Abstützen der Seilumlenkung 2 auf die Begrenzungsfläche 40 bietet. Der Vorzug dieser Variante liegt darin, dass die Seilumlenkung 2 nach diesem Ausführungsbeispiel zum Beispiel von einem rohrstückartigen Rohkörper ausgehend geschaffen wird. An einer Seite dieses Rohkörpers ist die trichterförmige Ausgestaltung der Rundung 20 zum Beispiel durch spanabhebende Bearbeitung einzuarbeiten und gegebenenfalls an der Innenmantelfläche das Gewinde 24 einzuschneiden. Grundsätzlich kann als Rohkörper hierzu zum Beispiel auch eine Mutter mit entsprechender Dimensionierung dienen, die zur Schaffung der Rundung 20 nachbearbeitet wird.

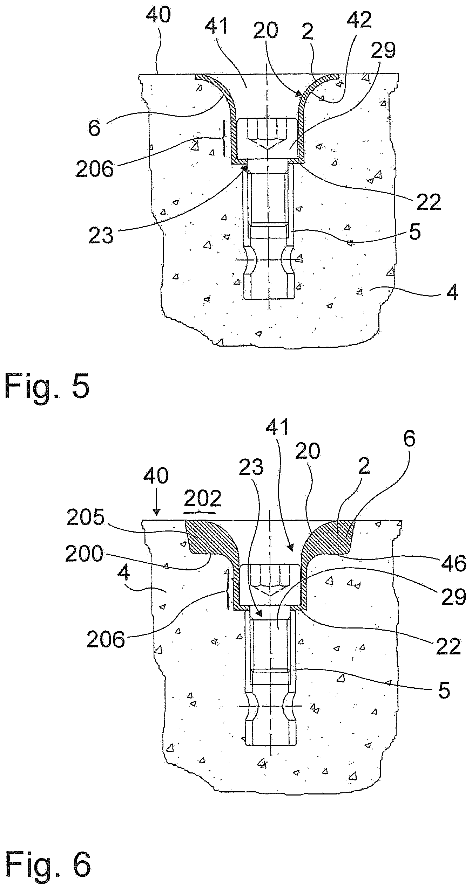

In Fig. 5 ist eine andere Variante der Ausgestaltung gezeigt. Die Seilumlenkung 2 wird hier geschaffen von einem als verlorenes oder nicht verlorenes Schalungs- oder Formteil 6 dienenden Element, das auch gleichzeitig als Seilumlenkung 2 wirkt. Die Anordnung ist dabei so gewählt, dass in das Betonfertigteil 4 mit Hilfe des Formteiles 6 eine Ausnehmung 41 realisiert wird. Geschickter Weise ist dabei das Formteil 6 mit Hilfe der Befestigungsschraube oder - bolzen 29 mit der Gewindehülse 5 verbunden. Das so vorbereitete Bauteil (Formteil 6, mit Befestigungsschraube 29 mit Gewindehülse 5 verbunden) wird an geeigneter Stelle in der Schalung angeordnet und befestigt und bildet nach dem Ausschalen die Ausnehmung 41 an deren unteren Ende sich die Gewindehülse 5 anschließt. Das Formteil 6 beziehungsweise die Seilumlenkung 2 besitzt dabei einen im oberen Bereich trichterförmig einlaufenden Abschnitt, der auch die Rundung 20 bildet und einen hülsenartigen inneren Abschnitt 206, der im äußeren Bereich in die Rundung 20 übergeht und im inneren Bereich an einem rechtwinklig nach innen vorstehenden, ringartigen Flanschbereich 22 endet. Der Flanschbereich 22 begrenzt eine Durchdringungsöffnung 23, durch welche, wie in Fig. 5 oder auch Fig. 6 gezeigt, die Befestigungsschraube 29 führbar ist.

Die hier dargestellte Variante ermöglicht zwei verschiedene Optionen. Wie in Fig. 5 dargestellt, ist in einer ersten Variante die Seilumlenkung 2 tatsächlich durch ein separates Bauteil, hier dem auch gleichzeitig als Formteil 6 bildenden Element, geschaffen. Das Formteil 6/Seilumlenkung 2 verbleibt dann zum Beispiel im Betonfertigteil, wenn die Befestigungsschraube 29 (zum Beispiel eine Innensechskantschraube) entfernt ist und an deren Stelle eine Seilöse, bestehend aus einer Rohrpressklemme 7 mit Außengewinde 72 und Seilschlaufe 13 eingedreht wird. Damit befindet sich der Flanschbereich 22 zwischen der Seilschlaufe 13 und der Gewindehülse 5. Es ist aber auch möglich, dass das Formteil 6 nach dem Ausschalen des Betonfertigteiles ebenfalls ausgebaut wird und dann die die Ausnehmung 41 begrenzenden Ausnehmungsflächen 42 als Seilumlenkung 2 dienen.

Es ist klar, dass sich in diesem Ausführungsbeispiel der Umlenkungsbereich 50 zum Beispiel oberhalb des Flanschbereiches 22 anschließt, da in diesem Bereich gegebenenfalls auch die Seilstücke 10, 10 ' aus der Rohrpressklemme 7 heraustreten. Natürlich begrenzt der Austrittsbereich der Seilstücke 10, 10' aus der Rohrpressklemme 7 den Umlenkungsbereich 50. In dem in Fig. 5 aber auch in Fig. 6 gezeigten Ausführungsbeispiel steht die Seilumlenkung 2 beziehungsweise die Rundung 20 nicht über die Begrenzungsfläche 40 vor.

Das in Fig. 5 kombiniert als Seilumlenkung 2 beziehungsweise Formteil 6 wirkende Element wurde dabei zum Beispiel aus einem rohrartigen Rohstück geschaffen und weist im Wesentlichen immer gleichbleibende Manteldicke auf .

Der in Fig. 6 gezeigte Aufbau ist dem nach Fig. 5 verhältnismäßig ähnlich, wobei sich die Wandstärke der Seilumlenkung 2, insbesondere im Rundungsbereich aufweitet, wie das auch bereits in Fig. 3a angedeutet ist. So besitzt auch die Seilumlenkung 2 in seinem Randbereich 202 eine größere Wandstärke und es ist auch hier eine Abstützfläche 200 vorgesehen, in welcher sich die Seilumlenkung 2 in einer verglichen mit Fig. 5 größeren Ausnehmung 41 an deren Bodenfläche 46 abstützt. Die hier gezeigte Variante besteht daher aus einem im Wesentlichen ringförmigen Bereich 205, der auch die Rundung 20 auf seiner Innenseite aufweist, an dessen unteren, der Rundung 20 abgeneigten Ende ein hülsenartiger Bereich 206 sich anschließt. Auch hier ist die Anordnung so gewählt, dass die Seilumlenkung 2 auch gleichzeitig als Formteil 6 dient und bei der Herstellung des Betonfertigteiles mitwirkt.

Die in Fig. 8 dargestellte Variante ist der nach Fig. 5 verhältnismäßig ähnlich beziehungsweise diese beiden Varianten könnten auch miteinander kombiniert werden. In Fig. 8 ist der Einsatz eines Formteiles 6 gezeigt, welches mit einem Gewindezapfen 64 in die Gewindehülse 5 eingedreht ist. Das Formteil 6 ist dabei einstückig mit dem Gewindezapfen 64 verbunden. Mittig angeordnet ist eine Innensechskantaufnahme 65 vorgesehen, um das Formteil 6 von der Gewindehülse 5 in schraubender Weise zu lösen. Die ganze Anordnung ist dabei rotationssymmetrisch. Das Formteil 6 bildet entsprechende Ausnehmungsflächen 42 der Ausnehmung 41, die als Seilumlenkung 2 dienen und eine Rundung 20 aufweisen. Die Anordnung ist dabei so gewählt wie in Fig. 5, nämlich, dass die Gewindehülse 5 über das Formteil 6 an der Schalung usw. befestigbar ist. Allerdings blockiert der mit dem Formteil 6 fest verbundene Gewindezapfen 64, dass das Formteil 6 auch gleichzeitig als Seilumlenkung 2 (wie in Fig. 5) dient.

Es ist ein Aspekt, dass die Seilumlenkung 2 auch am Bauteil 4 angeordnet ist und zum Beispiel durch die die Ausnehmung 41 begrenzenden Ausnehmungsflächen 42 gebildet ist. In der sich dann trichterförmig bildenden, eine Rundung 20 aufweisenden Ausnehmung 41 ist dann eine Seilöse an der vertieft eingelassenen Gewindehülse 5 einschraubbar.

Die Ausführung erlaubt es aber auch, dass nachdem das Formteil 6 gemäß Fig. 8 ausgebaut ist, an dessen Stelle die Seilumlenkung 2 nach Fig. 5 eingesetzt wird, welche in ihrem Flanschbereich 22 eine Durchdringungsöffnung 23 aufweist und so ein Anschrauben der Seilöse mit Rohrpressklemme 7 nicht verhindert. Im Übrigen ist die Ausgestaltung in Fig. 8, wie in Fig. 5 ausgeführt, realisiert.

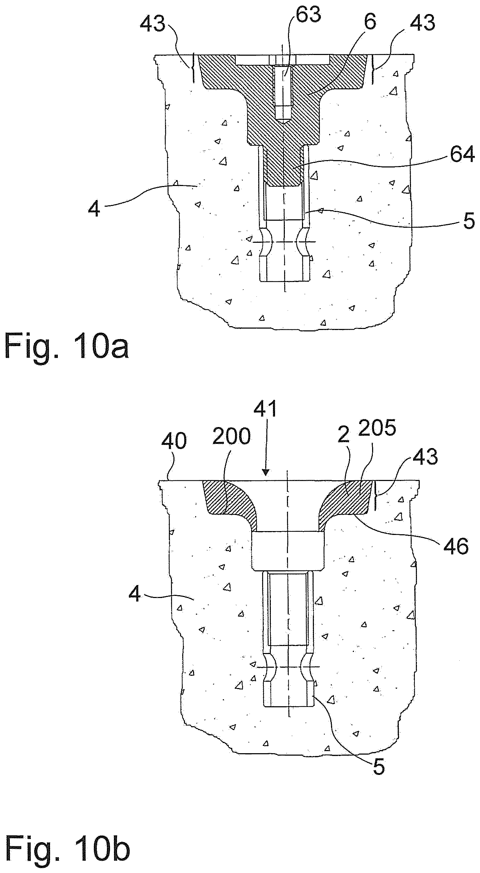

Die Variante nach Fig. 7 ist der Variante nach Fig. 6 verhältnismäßig ähnlich, wobei auch hier, also in Fig. 7, ähnlich wie bei Fig. 8 die Anordnung eines Formteiles 6 mit einem damit fest verbundenen Gewindezapfen 64 vorgeschlagen ist und daher das Formteil 6 zunächst eine Ausnehmung 41 bildet, in die dann zum Beispiel die Seilumlenkung 2 nach Fig. 6 einsetzbar ist. Die Variante nach Fig. 7 ist aber auch der Variante nach Fig. 10a, 10b sehr ähnlich. In der Variante nach Fig. 7 ist das Formteil, abgesehen von dem Gewindezapfen 64, dünnwandig ausgebildet und zum Beispiel aus einem Blechteil in einem Biegestanzprozess entstanden.

Bei der Variante nach Fig. 10a ist das Formteil 6 aus Vollmaterial gebildet und zum Beispiel als Drehteil entstanden. Die Anordnung ist so gewählt, dass das Formteil 6 oben, also an dem der Gewindehülse abgelegenen Ende, gegenüber der Begrenzungsflache 40 einen merklichen Absatz 43 bildet, wobei diese Randtiefe 43 so bemessen ist, dass ein Verschlussteller sicher und satt in die sich ergebende Ausnehmung 41 einsetzbar ist und das Betonfertigteil beziehungsweise Bauteil 4 zuverlässig verschließt und insbesondere auch die Gewindehülse 5 vor Korrosion usw. schützt.

Die in Fig. 10a gezeigte Variante des Formteiles 6 zeichnet sich des Weiteren durch eine Befestigungsöffnung 63 mit einem Innengewinde aus, durch welches es möglich ist, das Formteil 6 zusammen mit der daran aufgeschraubten Gewindehülse 5 zum Beispiel mit einer Befestigungsschraube rückseitig an einer Schalungswand anzuschrauben. Das Formteil 6 hält damit positionsgenau die Hülse 5 und bildet gleichzeitig die Ausnehmung 41 zur Aufnahme einer Seilumlenkung 2, wie sie zum Beispiel in Fig. 10b angedeutet ist. Eine verhältnismäßig breite Ausnehmung 41 mit der erheblichen Randtiefe 43 wird dabei von einer ringartigen Seilumlenkung 2 als separates Element ausgefüllt, wobei die Anordnung hier so gewählt ist, dass die ringartige (205) Seilumlenkung 2 mit der Begrenzungsfläche 40 des Bauteiles 4 bündig abschließt. Die ringartige Seilumlenkung 2, 205 wird dabei nur bei Bedarf in die sich ergebende Ausnehmung 41 eingelegt, zum Beispiel wenn die Last angehoben wird, hernach kann der Ring 205 wieder entnommen werden. Die verbleibende Öffnung 41 wird, wie geschildert, mit einem Verschlussteller (nicht gezeigt) verschlossen.

Es ist aber auch klar, dass anstelle der in Fig. 10b gezeigten ringförmigen Seilumlenkung 2, 205 auch eine Seilumlenkung 2 in der Gestalt nach Fig. 6 einsetzbar ist und in gleicher Weise verwendbar ist. Dabei ist zu beachten, dass diese ringartige Ausgestaltung der Seilumlenkung 2, 205, wie in Fig. 10b gezeigt, die gleichen Vorzüge zeigt, wie die Variante nach Fig. 6, nämlich eine zusätzliche Abstützfläche 200 zur Verfügung stellt, um sich in der Bodenfläche 46 der Ausnehmung 41 abzustützen.

Die in Fig. 9a, 9b und 9c gezeigte Variante ist dem Vorschlag nach Fig. 8 einerseits, aber auch dem Vorschlag nach Fig. 10a andererseits ähnlich. Parallelitäten im Aufbau des Formteiles 6 nach Fig. 9a bestehen mit der Variante nach Fig. 10a, da es sich bei dem hier gezeigten Formteil 6 um einen aus einem Vollmaterial bestehenden Körper handelt. Der Formkörper 6 ist so geschaffen, dass er in der von ihm im Betonfertigteil gebildeten Ausnehmung 41 an dessen Ausnehmungsflächen 42 eine Rundung 20 bildet. Logischerweise besitzt das Formteil 6 eine entsprechende "Negativform" zur Bildung der trichterförmigen Rundung 20 der Ausnehmungsflächen 42. Die sich hieraus ergebende Ausgestaltung des Lastaufnahmemittels 3 zeigt sich in Fig. 9c, bei dem die Seilumlenkung 2 am Betonfertigteil 4 angeordnet ist und so eine zuverlässige Umlenkung des Seilstückes 10 an der Rundung 20 zur Verfügung stellt. Ähnliche Verhältnisse werden durch das Formteil 6 nach Fig. 8 erzielt.

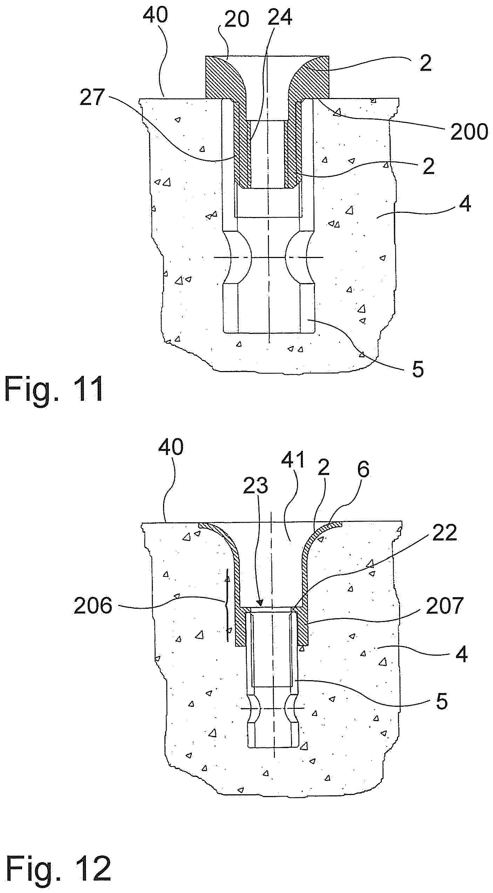

Fig. 11 ist eine weitere Variante. Die Seilumlenkung 2 ist als separates Element realisiert und besitzt sowohl ein Außengewinde 72 wie auch ein Innengewinde 24. Über das Außengewinde 72 ist die Seilumlenkung 2 in die Gewindehülse 5 eindrehbar. Das Innengewinde 24 erlaubt, dass in dieses das Außengewinde 72 der (nicht dargestellten) Rohrpressklemme 7 eindrehbar ist. Derart wird für die Seilöse 1 eine Rundung 20 zur Verfügung gestellt. Die Variante ist hier derart gezeigt, dass die Gewindehülse 5 an der Begrenzungsfläche 40 endet. Sie ist in analoger Weise aber auch bei zurückgesetzten Gewindehülsen 5 realisierbar. Die Seilumlenkung 2 hat somit auch die Funktion einer Adapterschraube und erlaubt ebenfalls, wie die anderen Varianten auch, eine Umlenkung des Seiles von mehr als 45° durch die trichterartige Ausgestaltung der Rundung 20, und zwar in allen Richtungen. Auch diese Ausgestaltung stützt sich über die Abstützfläche 200 auf der Begrenzungsfläche 40 ab.

Die Variante nach Fig. 12 ist dem Vorschlag nach Fig. 5 nicht unähnlich. In dem Vorschlag nach Fig. 5 wird das gleichzeitig als Formteil 6 beziehungsweise Seilumlenkung 2 dienende Element mit einer Befestigungsschraube 29 an der Gewindehülse 5 befestigt. In dem in Fig. 12 gezeigten Ausführungsbeispiel ist der hülsenartige beziehungsweise rohrartige Abschnitt 206, der sich von der Begrenzungsfläche 40 abgewandten Seite der Rundung 20 ins Innere fortstreckt um einen Ringabschnitt 207 verlängert, der auf die Außenseite der Gewindehülse 5 aufsteckbar ist. Der Flanschbereich 22 steht als Begrenzungsring auf dem Ende der Gewindehülse auf. Durch die Durchdringungsöffnung 23 ist die Seilöse mit der Rohrpressklemme 7 durchsteckbar und einschraubbar. Das separate Element ist zum Beispiel als verlorene Kunststoffhülse ausgebildet, auch hier läuft die Rundung bündig mit der Betonoberfläche beziehungsweise Begrenzungsfläche 40 aus.

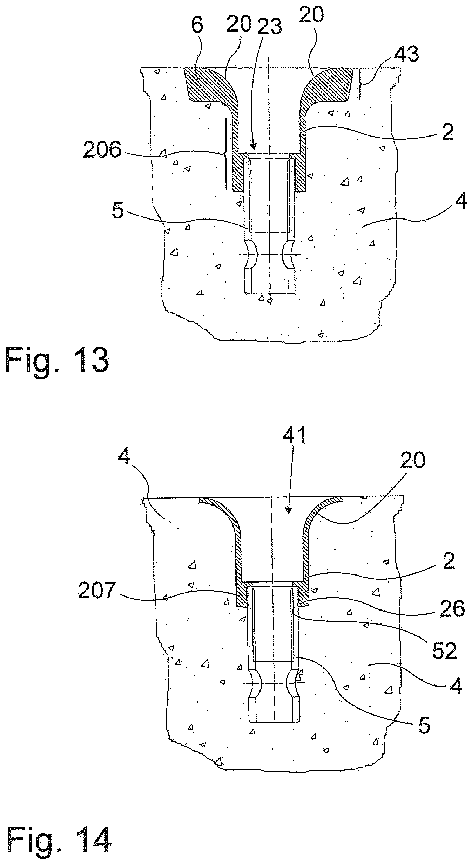

Der Vorschlag nach Fig. 14 baut auf den Vorschlag von Fig. 12 auf und ist diesem daher sehr ähnlich. Zusätzlich ist in dem Ring 207 eine nach innen vorstehende Rastnase 26 oder auch Rastnut vorgesehen, die in eine entsprechende Aufnahmekerbe 52 der Gewindehülse 5 rastend und dann formschlüssig für Verbindungszwecke eingreift. Damit wird die Verbindung zwischen diesem als verlorenen Schalungsteil dienenden Element und der Gewindehülse 5 verbessert, das Element kann als verlorenes Schalungsteil, die Seilumlenkung 2 bildend, im Bauteil 4 verbleiben oder nach dem Ausschalen auch entfernt werden, wobei dann die Seilumlenkung 2 von der Ausnehmungsfläche 42, analog dem Vorschlag nach Fig. 9c gebildet wird.

Fig. 13 ist eine Kombination des Vorschlages nach Fig. 12 und Fig. 6, wobei hier wiederum die Doppelfunktion von Seilumlenkung 2 und Formteil 6 an einem Bauteil realisiert ist und das Formteil 6 durch den ringartigen Überstand 207 auf die Gewindehülse 5 aufschiebbar ist. Die Seilumlenkung 2 / Formteil 6 besitzt wiederum eine entsprechende Randtiefe 43 zur Bildung eines entsprechenden Absatzes in der Ausnehmung 41. Das Formteil 6 ist daher nach dem Bau entfernbar und die sich dann bildende große Öffnung 41 ist mit einem Verschlussteller verschließbar. Im Übrigen ist die Ausgestaltung in Fig. 13 ähnlich der Variante nach Fig. 12.

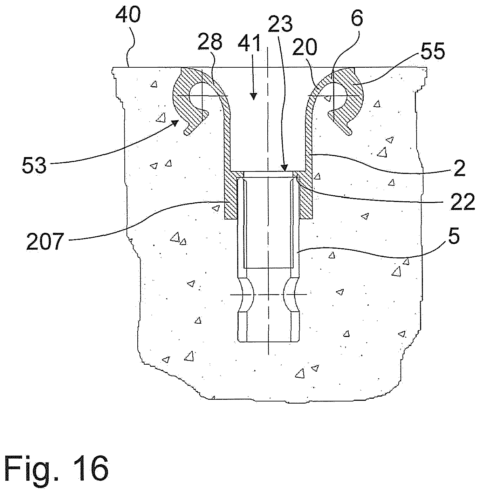

Die Variante nach Fig. 16 vereinigt verschiedene Merkmale, wie sie zum Beispiel bereits in Fig. 1a oder Fig 12. gezeigt sind. Die Seilumlenkung 2 ist in dem hier gezeigten Ausführungsbeispiel in einem verlorenen Schalungsteil 28 realisiert, das auch gleichzeitig als Formteil 6 wirkt. Die Gewindehülse 5 ist gegenüber der Begrenzungsfläche 40 zurückgesetzt. Dies entspricht insofern der Variante nach Fig. 12. Ebenfalls, wie in Fig. 12 gezeigt, ist an dem Formteil 6 / Seilumlenkung 2 ein Ring 207 vorgesehen, um die Seilumlenkung 2 / Formteil 6 klemmend auf die Gewindehülse 5 aufzusetzen. Dabei liegt dann der Flanschbereich 22 an dem Gewindehülseoberrand auf und es besteht die Durchdringungsöffnung 23 für das Einführen der Rohrpressklemme 7 der Seilöse 1. Der auslaufende Bereich der Rundung 20 (von der Gewindehülse 5 abgewandt) besitzt in diesem Ausführungsbeispiel das Verbindungselement 53, um eine Verbindung gegebenenfalls mit einem Bewährungsstab oder ähnlichem herzustellen. Das verlorene Schalungsteil 28 ist zum Beispiel als Kunststoffspritzteil ausgebildet. Die halbkreisförmigen Elemente 55 umschließen gegebenenfalls den Bewährungsstab. Ist ein solcher nicht vorhanden, so dringt in diesen Freiraum Beton ein und gibt eine feste Verankerung des verlorenen Schalungsteiles 28. Somit ist auch die Rundung 20 ausreichend stabil ausgeführt.

In den Fig. 18a bis 18f sowie 17a bis 17d wird eine Ausführung des erfindungsgemäßen Lastaufnahmemittels gezeigt. Im Rahmen der Definition wird eine Seilöse 1 gebildet von einer Seilschlaufe 13, deren beide Enden an den gleichen Enden 70 (siehe zum Beispiel Fig. 1a) oder gegenüberliegenden Enden 70, 71 (vergleiche Fig. 18a) in einer Rohrpressklemme 7, im Wesentlichen parallel zueinander liegend, verpresst sind. Dabei wird die Seilöse 1, wie sie in Fig. 18a verwendet wird, auch oftmals als Anker oder BS-Anker in der Fachwelt bezeichnet. Diese Begriffe sind untereinander gleichwertig. Der Unterschied zwischen den beiden Varianten liegt darin, dass die letztere Variante nach Fig. 18a in das Betonfertigteil 4 einbetoniert wird und somit die Seilöse unlösbar am Bauteil vorgesehen ist beziehungsweise nur durch deren Zerstörung von dieser entfernt werden kann, zum Beispiel durch Durchschneiden. Die Lösung nach Fig. 1a, 1b hingegen zeigt eine Seilöse, die mit der mit einem Außengewinde 72 ausgestatteten Rohrpressklemme 7 bei Bedarf in die Gewindehülse 5 eines Transportankers oder ähnlichem einschraubbar ist.

Auch die Variante nach Fig. 18a zeigt, dass das Seilstück 10 an der Austrittsstelle 44 aus dem Betonfertigteil heraustritt und das Seilstück 10' an der Eintrittsstelle 45 wieder in den Beton eintritt, wobei Einbeziehungsweise Austrittsstelle 44, 45 voneinander beabstandet sind. Dabei sind das Seilstück 10, 10 ' jeweils beabstandete Bereich des die Seilschlaufe 13 bildenden Seiles. Sowohl an der Austrittsstelle 44 wie an der Eintrittsstelle 45 ist die Problematik gegeben nach dem Stand der Technik, dass die jeweiligen Seilstücke 10, 10' in der Weise abgeknickt werden können, dass diese nicht mehr voll belastbar sind. Es ist daher vorgesehen, dass sowohl an der Eintrittswie auch an der Austrittsstelle 44, 45 je eine Seilumlenkung 2, 2a, 2b vorgesehen ist. Die Seilumlenkungen 2a, 2b sind dabei in gleicher Art ausgebildet wie nach Fig. 1a usw., das heißt sie sind trichterförmig gestaltet.

Fig. 18b ist eine um 90° gedrehte Ansicht bezüglich Fig. 18a und zeigt die trichterförmige Ausgestaltung der Seilumlenkung 2. Um die sich normalerweise kreisrund ausbildende Seilschlaufe 13 etwas länglich zu gestalten, ist ein Verbindungsbügel 12 zwischen den beiden Teilsträngen, ungefähr in der Mitte der Seilschlaufe angeordnet. Dadurch wird erreicht, dass die Rohrpressklemme 7, die die beiden Seilstückenden miteinander verbindet, relativ weit im Inneren des Betonfertigteiles positionierbar ist und somit der Lasteintrag in diese entsprechend verbessert ist. Die längliche Ausgestaltung der Seilschlaufe, die durch den Verbindungsbügel 12 resultiert, liegt ungefähr in einem Längen-Breiten-Verhältnis von 2:1 bis 5:1, bevorzugt ca. 3 : 1 bis 4 : 1.

Die in Fig. 18a, 18b vorgestellte Seilumlenkung unterscheidet sich etwas von der in den anderen Ausführungsbeispielen gezeigten Anordnung. Pro Seilstück 10, 10' ist hier jeweils eine eigene Seilumlenkung 2a, 2b vorgesehen. Geschickter Weise wird daher vorgesehen, dass das hier zur Verwendung bestimmte Formteil 6 als Formteilsatz 61 realisiert ist, welches aus mehreren Formteilelementen 60 besteht. Dies ist zum Beispiel in Fig. 18d gezeigt, bei welchen zwei im Wesentlichen identische Formteilelemente 60, 60' zu einem Formteilsatz 61 zusammengesetzt werden. Gegebenenfalls sind entsprechende Verbindungselemente vorgesehen, um die beiden Elemente fest miteinander zu verbinden. Die Formteilelemente 60, 60' sind dabei bevorzugt identisch gestaltet und wirken derart miteinander zusammen, dass eine das Seilstück 10, 10 ' aufnehmende Öffnung 62, 62' bilden, die im unteren Bereich der Rundung 20 vorgesehen ist. Dabei ist die Anordnung so gewählt, dass das Formteil 6 beziehungsweise der Formteilsatz 61 mit einer Vielzahl von Befestigungsöffnungen 63, insbesondere im Randbereich, also nicht im Bereich der trichterförmigen Rundung 20, ausgestattet ist, um das Formteil 6 zum Beispiel in einer Schalung usw. anzunageln. Die Verbindungskante zwischen den beiden Formteilelementen 60, 60' ist mit 67 gekennzeichnet.

Es ist klar, dass auch der Formteilsatz 61, wie er in Fig. 18a bis 18f gezeigt ist, als verlorene Schalung dienen kann oder aber die Anordnung ist so gewählt, dass der Formteilsatz nach dem Aufschalen wieder geöffnet werden kann und so den aus dem Betonfertigteil vorstehenden Bereich der Seilöse freigibt, um wiederverwendet zu werden. Auch der Formteilsatz ist zum Beispiel aus Metall, Blech oder auch aus Kunststoff oder anderen Materialien herstellbar. In den Fig. 17a, 17b, 17c und 17d ist eine weitere Variante der erfindungsgemäßen Ausgestaltung gezeigt. Der hier gezeigte Anwendungsfall ist mit dem nach Fig. 18a bis 18f vergleichbar, wenngleich hier die Seilumlenkung variiert wird. In dem hier gezeigten Anwendungsfall tritt das erste Seilstück 10 an einer Austrittsstelle aus dem Bauteil aus und tritt an einer von der Austrittsstelle beabstandeten Eintrittsstelle wieder in dieses ein. Für beide Seilstücke 10, 10' ist eine gemeinsame Seilumlenkung 2, 210, wie insbesondere in Fig. 17d angedeutet, vorgesehen. Hieraus ergibt sich, dass die Eintritts- und Austrittsstelle voneinander beabstandet ist, dass die gemeinsame Seilumlenkung 210 als längliches Element, also längserstreckend ausgebildet ist und insofern von der rotationssymmetrischen Form, wie sie vorher diskutiert wurde, abweicht. Dies unterstreicht den hohen Variabilitätsgrad. Üblicherweise wird eine solche Seilumlenkung nur entlang einer Achse auf Abwinklung beansprucht, weswegen es grundsätzlich ausreicht, dass im Querschnitt gesehen (rechtwinklig zur Längserstreckung der gemeinsamen Seilumlenkung) die Seitenwände 211 trichterförmig, insbesondere einer Rundung folgend, ausgebildet ist, wie dies in Fig. 17b angedeutet ist.

Bezogen auf das Seilstück 10, 10', das auf der Rundung aufliegt, folgt die Rundung einem konvexen Bogen, der gegebenenfalls auch von einer Kreisform abweichen kann. Besonders vorteilhaft ist dabei, dass die gemeinsame Seilumlenkung 2, 210 insbesondere während des Betonierens als Aufbewahrungsraum für das aus dem Bauteil hernach vorstehende Seilstück 10 dient. Somit hat das Seilstück während des Betonierens seinen Platz. Auch die gemeinsame Seilumlenkung ist als Formteilsatz 61 realisierbar und alle diesbezüglich gemachten Ausführungen und genannten Merkmale sind sinngemäß auf diese übertragbar. Dabei dient das als Formteil 6 realisierte gemeinsame Seilumlenkung 2, 210 auch als Führungselement für die Anordnung der Seilöse beziehungsweise des Ankers oder Seilankers.

In Fig. 17d ist noch angedeutet, dass auch dieses Formteil 6 aus zwei an einer Verbindungskante 67 zusammenstoßenden, im wesentlichen identische Formteilementen 60, 60' gebildet ist.

In Fig. 19a, 19b und 19c ist noch eine Variante gezeigt, die auf den ersten Blick der Lösung nach Fig. 1a und 9c entspricht. Die Gewindehülse 5 ist, wie in Fig. 19a gezeigt, im Bauteil 4 eingebaut. Die Rohrklemme 7 ist in den Gewindeabschnitt der Gewindehülse 4 eingedreht und ist fest mit dem Seilstück verpresst. Die Rundung 20 ist an der Seilumlenkung 2 in mehrere Teilrundungen 215, 215', 215'' aufgeteilt. Zwischen diesen beiden Teilrundungen 215, 215' ist ein Bereich 216 mit negativen Radius beziehungsweise als Freistich ausgebildet. Es ergibt sich, dass das abgewickelte Seil 10 an dem aus der Rohrklemme austretenden Bereich, an der Ausweitung 201 an der Aufweitung, die hier auch als Teilrundung 215 wirkt, anliegt, dann einen gewissen Bereich an der Rundung überspannt, um dann an der zweiten Teilrundung 215 wiederum anzuliegen. Insbesondere ist in Fig. 19a gut zu sehen, dass die Seilumlenkung 2 in zwei voneinander distanzierte Teilseilumlenkungen 217a und 217b aufgeteilt ist. Dabei ist die erste Teilseilumlenkung 217b einstückig an der Rohrpressklemme 7 angeordnet und besteht hier aus zwei Teilrundungen 215, 215'. Die zweite Teilseilumlenkung 217b ist an der Ausnehmung 40 des Bauteiles 4 an dessen Wandung vorgesehen und bildet ebenfalls eine Teilrundung 215''. Ein wesentlicher Vorteil der in Fig. 19a, 19b und 19c gezeigten Ausgestaltung liegt darin, dass diese sehr gut herzustellen ist und materialsparend ist. Die innenliegende Teilrundung 215' dient letztendlich auch als Aufweitung 201, wie dies auch schon in Fig. Ia gezeigt ist. Auch da (Fig. 1a) ergibt sich diese Teilrundung am Austrittsbereich des Seiles aus der Rohrpressklemme 7. Es ist genau die gleiche Situation. Mit 218 ist die Außenkontur der Rohrpressklemme 7 beschrieben, die konisch oder trichterförmig ausgebildet ist und dem Seilstück 13 zugewandt ist. Es steht im eingebauten Zustand aus dem Gewinde der Gewindehülse 5 vor. Oberhalb an diesem konischen oder trichterförmigen Außenkontur 218 schließt sich dann noch ein zylindrischer Bereich 219 an, der ein Spannen des Lastaufnahmemittels mit einem Spannelement für Bearbeitungszwecke (Einschneiden des Gewindes) problemlos erlaubt.

## Patentansprüche

1. Lastaufnahmemittel zum Anschlagen eines schweren Bauteils, insbesondere Betonfertigteils, bestehend aus zwei Seilstücken (10, 10') einer Seilschlaufe (13) und einer Seilumlenkung (2) oder zwei Seilumlenkungen (2), die dazu dienen, die aus dem Bauteil (4) herausstehenden Seilstücke (10, 10') einer Rundung (20) folgend umzulenken, **dadurch gekennzeichnet, dass** die Seilumlenkungen (2) an einem Formteil (6) vorgesehen sind, welches als Formteileinsatz (61) realisiert ist, welcher aus zwei an einer Verbindungskante (67) zusammenstoßenden, im wesentlichen identischen Formteilelementen (60) besteht, wobei die zwei zusammenwirkenden Formteilelemente (60) für jedes Seilstück (10, 10') eine das Seilstück (10, 10') aufnehmende Öffnung bilden, und wobei für die Seilstücke (10, 10') eine gemeinsame Seilumlenkung (2, 210) oder pro Seilstück (10, 10') jeweils eine eigene Seilumlenkung (2a, 2b) vorgesehen ist, wobei der Formteileinsatz (61) dazu ausgebildet ist, dass das jeweilige Seilstück (10, 10') zwischen den beiden Formteilelementen (60) angeordnet werden kann und von diesen gehalten ist.

2. Lastaufnahmemittel nach Anspruch 1, **dadurch gekennzeichnet, dass** die Seilstücke (10, 10') an voneinander beabstandeten Einbeziehungsweise Austrittstellen (44, 45) in das Bauteil (4) einbeziehungsweise austreten.

3. Lastaufnahmemittel nach einem der vorhergehenden Ansprüche, **dadurch gekennzeichnet, dass** das gemeinsame Formteil (6) beziehungsweise der Formteileinsatz (61) für eine Befestigung des Seilstückes (10) an der Betonschalung dient.

4. Lastaufnahmemittel nach einem der vorhergehenden Ansprüche, **dadurch gekennzeichnet, dass** das gemeinsame Formteil (6) beziehungsweise der Formteileinsatz (61) zum Abdichten zwischen Seilstück (10) und Betonschalung dient.

5. Lastaufnahmemittel nach einem der vorhergehenden Ansprüche, **dadurch gekennzeichnet, dass** der Mindestradius der Rundung (20) der Seilumlenkung (2) mindestens dem Seildurchmesser, bevorzugt mindestens dem doppelten des Seildurchmessers entspricht.

6. Bauteil mit einem Lastaufnahmemittel nach einem der vorhergehenden Ansprüche, **dadurch gekennzeichnet, dass** die Seilschlaufe (13) unlösbar im Bauteil vorgesehen ist.

7. Lastaufnahmemittel nach einem der vorhergehenden Ansprüche, **dadurch gekennzeichnet, dass** das Formteil (6) eine Vielzahl von Befestigungsöffnungen (63) aufweist.

8. Lastaufnahmemittel nach Anspruch 7, **dadurch gekennzeichnet, dass** die Befestigungsöffnungen (63) in einem Randbereich des Formteils ausgebildet sind.

## Claims

1. Load lifting device for fastening a heavy component, in particular precast concrete component, consisting of two rope parts (10, 10'), a rope loop (13), and a rope deflection (2) or two rope deflections (2) serving for deflecting the rope parts (10, 10') projecting from the component (4), following a curve (20), **characterized in that** the rope deflections (2) are provided at a molded part (6) realized as molded part insert (61) consisting of two essentially identical molded part elements (60) abutting at a joining edge (67), wherein the two interacting molded part elements (60) form an opening for each rope part (10, 10') holding the rope part (10, 10'), and wherein for the rope parts (10, 10') a common rope deflection (2, 210), or for each rope part (10, 10') its own rope deflection (2a, 2b) is provided, wherein the molded part insert (61) is designed such that the respective rope part (10, 10') can be arranged between the two molded part elements (60), and is held by them.

2. Load lifting device according to claim 1, **characterized in that** the rope parts (10, 10') enter or exit the component (4) at spaced points of entering or exiting (44, 45).

3. Load lifting device according to one of the preceding claims, **characterized in that** the common molded part (6) or the molded part insert (61) serves for attaching the rope part (10) to the concrete formwork.

4. Load lifting device according to one of the preceding claims, **characterized in that** the common molded part (6) or molded part insert (61) serves for sealing between rope part (10) and concrete formwork.

5. Load lifting device according to one of the preceding claims, **characterized in that** the minimum radius of the curve (20) of the rope deflection (2) corresponds at least with the rope diameter, preferably at least with double the diameter.

6. Component with a load lifting device according to one of the preceding claims, **characterized in that** the rope loop (13) is provided inextricably linked in the component.

7. Load lifting device according to one of the preceding claims, **characterized in that** the molded part (6) has a multitude of fastening openings (63).

8. Load lifting device according to claim 7, **characterized in that** the fastening openings (63) are formed in a peripheral area of the molded part.

## Revendications

1. Moyen de prise en charge pour l'élingage d'un élément de construction lourd, en particulier d'un élément préfabriqué en béton, consistant en deux tronçons de câble (10, 10'), en une boucle de câble (13) et en un renvoi de câble (2) ou en deux renvois de câble (2) servant à renvoyer selon une courbure (20) les tronçons de câble (10, 10') dépassant l'élément de construction (4), **caractérisé en ce que** les renvois de câble (2) sont prévus au niveau d'une pièce préformée (6) réalisée comme un ensemble d'éléments préformés (61) et consistant en deux pièces préformées (60) essentiellement identiques et se joignant au niveau d'un bord de liaison (67) de façon à ce que chacune de ces deux pièces préformées (60) possède une ouverture recevant chacune un tronçon de câble (10, 10') et à ce qu'un renvoi commun de câble (2, 210) est prévu pour les tronçons (10, 10') ou un renvoi de câble (2a, 2b) est prévu pour chacun des tronçons de câble (10, 10') et ceci, avec un ensemble d'éléments préformés (61) configuré de sorte que chacun des tronçons de câble (10, 10') peut être placé entre les deux pièces préformées (60) et maintenu par ceux-ci.

2. Moyen de prise en charge selon la revendication 1, **caractérisé en ce que** les tronçons de câble (10, 10') entrent dans l'élément de construction (4) ou sortent de l'élément de construction au niveau des endroits d'entrée et de sortie distants (44, 45).

3. Moyen de prise en charge selon une des revendications précédentes, **caractérisé en ce que** la pièce préformée commune (6) ou l'ensemble d'éléments préformés (61) sert comme moyen de fixation d'un tronçon de câble (10) au niveau du coffrage de béton.

4. Moyen de prise en charge selon une des revendications précédentes, **caractérisé en ce que** la pièce préformée commune (6) ou l'ensemble d'éléments préformés (61) sert à créer l'étanchéité entre le tronçon de câble (10) et le coffrage de béton.

5. Moyen de prise en charge selon une des revendications précédentes, **caractérisé en ce que** le rayon minimal de la courbure 20 du renvoi de câble (2) correspond au moins au diamètre du câble, de préférence au moins au double du diamètre du câble.

6. Elément de construction avec un moyen de prise en charge selon une des revendications précédentes, **caractérisé en ce que** la boucle de câble (13) est fixée de façon inamovible dans l'élément de construction.

7. Moyen de prise en charge selon une des revendications précédentes, **caractérisé en ce que** la pièce préformée (6) comporte une pluralité d'ouvertures de fixation (63).

8. Moyen de prise en charge selon la revendication 7, **caractérisé en ce que** les ouvertures de fixation (63) sont formées dans une zone du bord de la pièce préformée.
